# EUROPÄISCHE PATENTSCHRIFT

(11) **EP 3 716 014 B1**
(45) Veröffentlichungstag und Bekanntmachung des Hinweises auf die Patenterteilung: **13.09.2023**
(21) Anmeldenummer: 19165281.7
(22) Anmeldetag: 26.03.2019
(51) Int. Cl.: G06F 3/01, G06T 19/00

(54) **ÜBERTRAGEN EINES ZUSTANDS ZWISCHEN VR-UMGEBUNGEN**
TRANSFER OF A CONDITION BETWEEN VR ENVIRONMENTS
TRANSFERT D'UN ÉTAT ENTRE DES ENVIRONNEMENTS DE LA RÉALITÉ VIRTUELLE

(43) Veröffentlichungstag der Anmeldung: 30.09.2020
(73) Patentinhaber: Siemens Healthcare GmbH, 91052 Erlangen (DE)
(72) Erfinder: Ebert, Anton, 90429 Nürnberg (DE)

(56) Entgegenhaltungen:
- EP-A2- 0 982 671
- US-A1- 2018 268 775

## Beschreibung

Anwendungen basierend auf VR (englisches Akronym für "virtual reality", eine deutsche Übersetzung ist "virtuelle Realität") oder AR (englisches Akronym für "augmented reality", eine deutsche Übersetzung ist "verbesserte Realität") sind in vielen Bereichen der Technik verbreitet.

Bei Anwendungen basierend auf VR wird einem Nutzer, üblicherweise mittels einer Brille, im Regelfall eine Darstellung einer virtuellen Umgebung bereitgestellt, wobei die Darstellung von einer Position und/oder Orientierung des Kopfes des Nutzers abhängig ist. Bei Anwendungen basierend auf AR wird einem Nutzer, üblicherweise ebenfalls mittels einer Brille, eine teilweise Darstellung einer virtuellen Umgebung bereitgestellt, wobei in dieser Darstellung virtuelle Objekte in die reale Umgebung des Nutzers eingeblendet werden.

Anwendungen basierend auf VR und AR finden sich insbesondere im Training und in der Anleitung von Nutzern. Beispielsweise können sich Nutzer mittels VR und AR mit einem Verfahren oder einem Gerät vertraut machen, ohne dieses tatsächlich durchzuführen bzw. zu benutzen. Beispiele für solche Trainingsanwendungen sind das Training medizinischer Abläufe oder die Bedienung medizinischer Geräte.

Gerade für unerfahrene Nutzer ist es wertvoll, eine Vorlage für einen korrekten Ablauf eines Verfahrens oder eine korrekte Bedienung eines Geräts zu haben. Daher ist es vorteilhaft, die Handlungen eines erfahrenen Nutzers einem unerfahrenen Nutzer in der virtuellen Realität darzustellen, entweder parallel zu den Handlungen des erfahrenen Nutzers, oder als Aufzeichnung.

Beschränkt man die Darstellung der Handlungen des erfahrenen Nutzers auf das Gesichtsfeld (ein englischer Fachbegriff ist "field of view") des erfahrenen Nutzers können die unerfahrenen Nutzer in der VR oder der AR die Umgebung nicht vollständig wahrnehmen, da z.B. kein Umblicken möglich ist. Insbesondere unterscheidet sich die Darstellung der Handlungen des erfahrenen Nutzers dann vom eigentlichen Training der unerfahrenen Nutzer.

Die Druckschrift US 2018/268775 A1 beschreibt eine Kopplung zwischen zwei Computersystemen zur Darstellung einer geteilten VR-Umgebung, bei denen Änderungen an der VR-Umgebung zwischen den Computersystemen übertragen werden können. Die Druckschrift EP0982671A2 beschreibt die Darstellung von Szeneninformationen basierend auf dynamischen Objekteigenschaften.

Es ist daher die Aufgabe der Erfindung, eine Möglichkeit bereitzustellen, eine VR-Umgebung zwischen Nutzern zu übertragen.

Die Aufgabe wird gelöst durch ein Verfahren zum Bestimmen einer Darstellung eines Objektes in einer zweiten VR-Umgebung, durch ein Übertragungssystem, durch ein Computerprogramm, durch ein computerlesbares Speichermedium, durch eine Datenstruktur und durch ein Verfahren zum Bestimmen eines Zustands eines Objekts gemäß den unabhängigen Ansprüchen. Vorteilhafte Weiterbildungen sind in den abhängigen Ansprüchen und in der Beschreibung angegeben.

Nachstehend wird die erfindungsgemäße Lösung der Aufgabe sowohl in Bezug auf die beanspruchten Vorrichtungen als auch in Bezug auf das beanspruchte Verfahren beschrieben. Hierbei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf eine Vorrichtung gerichtet sind) auch mit den Merkmalen, die in Zusammenhang mit einem Verfahren beschrieben oder beansprucht sind, weitergebildet sein. Die entsprechenden funktionalen Merkmale des Verfahrens werden dabei durch entsprechende gegenständliche Module ausgebildet.

Die Erfindung betriff ein computerimplementiertes Verfahren zum Übertragen eines Zustands von einer ersten VR-Umgebung zu einer zweiten VR-Umgebung mit den Merkmalen nach Anspruch 1, umfassend ein Empfangen eines statischen Objektdatensatzes bezüglich eines Objektes mittels eines Empfangssystems, wobei das Objekt in einer durch ein Eingabesystem generierten ersten VR-Umgebung und in der durch das Empfangssystem generierten zweiten VR-Umgebung darstellbar ist. Das Verfahren umfasst weiterhin ein Bestimmen eines ersten dynamischen Objektdatensatz bezüglich des Objektes mittels des Sendesystems, wobei der erste dynamische Objektdatensatz eine dynamische Eigenschaft des Objektes in der ersten VR-Umgebung betrifft; sowie ein Übermitteln des ersten dynamischen Objektdatensatz vom Sendesystem zum Empfangssystem. Das Verfahren umfasst weiterhin das Bestimmen eines ersten Zustands der zweiten VR-Umgebung basierend auf dem statischen Objektdatensatz und dem ersten dynamischen Objektdatensatz mittels des Empfangssystems. Optional kann das Verfahren weiterhin ein Bereitstellen des ersten Zustands der VR-Umgebung mittels des Empfangssystems umfassen, wobei das Bereitstellen insbesondere ein Anzeigen der VR-Umgebung im ersten Zustand umfassen kann.

Insbesondere erfolgt hierbei das Empfangen des statischen Objektdatensatz mittels einer Schnittstelle des Empfangssystems. Weiterhin erfolgt das Bestimmen des ersten Objektdatensatz insbesondere mittels einer Recheneinheit des Sendesystems. Weiterhin erfolgt das Übermitteln des ersten dynamischen Objektdatensatz insbesondere von einer Schnittstelle des Sendesystems zu der Schnittstelle des Empfangssystems. Weiterhin erfolgt das Bestimmen des ersten Zustands der zweiten VR-Umgebung insbesondere mittels einer Recheneinheit des Empfangssystems. Das optionale Bereitstellen kann insbesondere mit einer Ausgabeeinheit des Empfangssystems erfolgen.

Der Begriff VR (Akronym für "virtuelle Realität" oder "virtual reality") bezeichnet insbesondere die Darstellung einer in Echtzeit computergenerierten, interaktiven virtuellen Umgebung zur Wahrnehmung durch einen Benutzer. Hierbei ist die virtuelle Umgebung insbesondere einer tatsächlichen Umgebung nachgestaltet. Bei einer virtuellen Realität wird der Benutzer insbesondere eingebettet, insbesondere kann es für den Benutzer nicht mehr möglich sein, die echte Realität wahrzunehmen (Fachbegriff "Immersion"). Weiterhin ist es für den Benutzer insbesondere möglich, mit der virtuellen Welt zu interagieren bzw. diese zu Verändern.

Der Begriff "VR-System" bezeichnet insbesondere ein System zur Darstellung einer virtuellen Umgebung für einen Benutzer. Insbesondere sind das Sendesystem und/oder das Empfangssystem ein VR-System.

Der Begriff "VR-Umgebung" bezeichnet insbesondere eine einem VR-System dargestellte virtuelle Umgebung. Eine VR-Umgebung kann insbesondere an das darstellende VR-System angepasst sein, beispielsweise können unterschiedliche VR-Systeme VR-Umgebung in unterschiedlichem Detailgrad oder in unterschiedlicher Auflösung darstellen.

Ein Objekt ist insbesondere eine Einheit, die in einer VR-Umgebung darstellbar ist. Insbesondere kann ein Objekt durch eine Menge von weiteren Objekten definiert sein. Insbesondere kann eine VR-Umgebung durch eine Menge von Objekten vollständig definiert sein. Beispiele für Objekte sind Gegenstände, Wände, Räume, Personen oder Bedienelemente, die in einer VR-Umgebung dargestellt werden bzw. darstellbar sind. Ein englischer Fachbegriff für Objekt ist "Asset".

Ein Objekt kann eine Menge an Eigenschaften aufweisen, welche das Aussehen oder das Verhalten des Objektes beschreiben bzw. bestimmen. Beispiele für solche Eigenschaften sind unter anderem ein 3D-Modell eines Objektes, Texturen eines Objektes, die Position des Objektes in der VR-Umgebung, die Orientierung des Objektes, ein Zustand des Objektes, die Reaktion des Objektes auf äußere Einflüsse.

Ein Zustand eines Objektes ist insbesondere die Summe der Eigenschaften des Objektes in einer VR-Umgebung, insbesondere die Darstellung des Objektes in einer VR-Umgebung.

Der Erfinder hat erkannt, dass basierend auf einer Separierung der Beschreibung eines Objekts in einen statischen Objektdatensatz und in einen dynamischen Objektdatensatz die typischerweise speicherintensiven statischen Objektdatensätze separat und insbesondere nur einmalig übertragen werden müssen. Da dynamische Objektdatensätze typischerweise weniger speicherintensiv sind, können diese bei einer gegebenen Bandbreite öfters übertragen werden. Insbesondere ist es möglich, die dynamischen Objektdatensätze in einen Datenstrom (ein englischer Fachbegriff ist "Stream"), insbesondere in einem Live-Datenstrom zu übertragen, und dadurch auch eine vollständige VR-Umgebung in einem Datenstrom bzw. in einem Live-Datenstrom übertragbar zu machen.

In einer Ausführungsform, welche nicht beansprucht ist, umfasst das Bestimmen des ersten Zustandes der zweiten VR-Umgebung ein Bestimmen einer ersten Darstellung des Objektes in der zweiten VR-Umgebung basierend auf dem statischen Objektdatensatz und dem ersten dynamischen Objektdatensatz mittels des Empfangssystems, insbesondere mittels einer Recheneinheit des Empfangssystems.

Der Erfinder hat erkannt, dass durch das Bestimmen der ersten Darstellung des Objektes der erste Zustand der VR-Umgebung besonders effizient bestimmt werden kann.

Vorzugsweise umfasst das Verfahren weiterhin ein Bestimmen einer Darstellung des Objektes in der ersten VR-Umgebung mittels des Sendesystems, insbesondere mittels einer Recheneinheit des Sendesystems.

Der Erfinder hat erkannt, dass durch die Darstellung des Objektes in der ersten VR-Umgebung und in der zweiten VR-Umgebung sowohl der Nutzer des Sendesystems als auch der Nutzer des Empfangssystems eine Darstellung des Objektes wahrnehmen können. Diese gemeinsame Darstellung kann dann insbesondere zur Demonstration des Objektes verwendet werden.

Nach einem weiteren möglichen Aspekt der Erfindung umfasst das Sendesystem eine erste Videobrille, und/oder das zweite Sendesystem umfasst eine zweite Videobrille. Ein englischer Fachbegriff für Videobrille ist "head-mountable display" bzw. "head-mounted display".

Der Erfinder hat erkannt, dass Videobrillen besonders gut für die Darstellung von VR-Umgebungen geeignet sind. Weiterhin sind Videobrillen üblicherweise kabellos ausgeführt, daher sind die Datenübertragungsraten von Videobrillen begrenzt. Daher kann das Verfahren insbesondere vorteilhafterweise bei Videobrillen eingesetzt werden, da das erfindungsgemäße Verfahren die zu übertragenden Daten minimiert.

Optional umfasst das Verfahren weiterhin ein Bestimmen eines zweiten dynamischen Objektdatensatzes bezüglich des Objektes mittels des Sendesystems, wobei der erste dynamische Objektdatensatz die dynamische Eigenschaft des Objektes zu einem ersten Zeitpunkt in der ersten VR-Umgebung betrifft, und wobei der zweite dynamische Objektdatensatz die dynamische Eigenschaft des Objektes zu einem zweiten Zeitpunkt in der ersten VR-Umgebung betrifft. Das Verfahren umfasst weiterhin das Übermitteln des zweiten dynamischen Objektdatensatzes vom Sendesystem zum Empfangssystem und das Bestimmen eines zweiten Zustands der zweiten VR-Umgebung basierend auf dem statischen Objektdatensatz und dem zweiten dynamischen Objektdatensatz mittels des Empfangssystems. Optional kann das Verfahren weiterhin ein Bereitstellen des zweiten Zustands der VR-Umgebung mittels des Empfangssystems umfassen, wobei das Bereitstellen insbesondere ein Anzeigen der VR-Umgebung im zweiten Zustand umfassen kann.

Hierbei erfolgt das Bestimmen des zweiten dynamischen Objektdatensatzes insbesondere mittels der Recheneinheit des Sendesystems. Das Übermitteln des zweiten dynamischen Objektdatensatzes vom Sendesystem zum Empfangssystem erfolgt insbesondere mittels einer Schnittstelle des Sendesystems und mittels einer Schnittstelle des Empfangssystems.

Die Erfinder haben erkannt, dass durch das Übermitteln des zweiten dynamischen Objektdatensatzes die der Zustand der zweiten VR-Umgebung aktualisiert werden kann, ohne erneut den speicherintensiven statischen Objektdatensatz zu übertragen. Insbesondere kann daher die Darstellung durch Übermittlung eines im Vergleich zu einer das Objekt vollständig beschreibenden Information kleinen Datensatzes aktualisiert werden.

Optional umfasst das Bestimmen des zweiten Zustandes der zweiten VR-Umgebung ein Bestimmen einer zweiten Darstellung des Objektes in der zweiten VR-Umgebung basierend auf dem statischen Objektdatensatz und dem zweiten dynamischen Objektdatensatz mittels des Empfangssystems, insbesondere mittels der Recheneinheit des Empfangssystems.

Der Erfinder hat erkannt, dass durch das Bestimmen der zweiten Darstellung des Objektes der zweite Zustand der VR-Umgebung besonders effizient bestimmt werden kann.

Optional umfasst das Verfahren weiterhin ein Feststellen einer Änderung der dynamischen Eigenschaft des Objektes, wobei das Bestimmen der zweiten dynamischen Objektdatensatz als Reaktion auf das Feststellen der Änderung der dynamischen Eigenschaft des Objektes erfolgt. Das Feststellen der Änderung kann hierbei insbesondere mittels der Recheneinheit des Sendesystems erfolgen.

Der Erfinder hat erkannt, dass durch das Bestimmen des zweiten dynamischen Objektdatensatzes nur als Reaktion auf eine festgestellte Änderung der dynamische Objektdatensatz deutlich seltener ermittelt und übertragen werden muss. Dadurch wird für die Ausführung des Verfahrens weniger Rechenkapazität des Sendesystems und/oder Übertragungskapazität zwischen Sendesystem und Empfangssystem benötigt, als wenn der dynamische Objektdatensatz beispielsweise in regelmäßigen zeitlichen Abständen bestimmt und übermittelt werden würde.

Optional wird das Feststellen wiederholt in einem konstanten zeitlichen Abstand durchgeführt wird. In anderen Worten wird das Feststellen wiederholt mit einer konstanten Abtastrate durchgeführt. Insbesondere ist die konstante Abtastrate der inverse Wert des konstanten zeitlichen Abstands. Ein englischer Fachbegriff für Abtastrate ist "Framerate".

Insbesondere kann der konstante zeitliche Abstand vom Empfangssystem an das Sendesystem übermittelt werden.

Der Erfinder hat erkannt, dass durch ein Feststellen in einem konstanten zeitlichen Abstand bzw. mit einer konstanten Abtastrate die Anzahl von Übertragungen des dynamischen Objektdatensatzes an die technischen Beschränkungen des Sendesystems, der Empfangssystems und/oder der Datenverbindung zwischen dem Sendesystem und dem Empfangssystem angepasst werden kann.

Im Speziellen ist die dynamische Eigenschaft des Objektes durch eine Interaktion eines Nutzers mit der ersten VR-Umgebung änderbar, insbesondere durch die Interaktion eines Nutzers des Sendesystems mit der ersten VR-Umgebung mittels des Sendesystems bzw. mittels einer Eingabeeinheit des Sendesystems. Insbesondere ist eine dynamische Eigenschaft eines Objektes eine Eigenschaft des Objektes, welche durch Interaktion eines Nutzers mit der ersten VR-Umgebung änderbar ist, insbesondere durch Interaktion eines Nutzers des Sendesystems mit der ersten VR-Umgebung mittels des Sendesystems bzw. mittels der Eingabeeinheit des Sendesystems änderbar.

Der Erfinder hat erkannt, dass die durch den Nutzer veränderbaren Eigenschaften von Objekten diejenigen Eigenschaften sind, die sich in einer VR-Umgebung regelmäßig und dynamisch änderbar sind. Daher kann eine VR-Umgebung besonderes effizient übertragen werden, indem die durch den Nutzer veränderbaren Eigenschaften von Objekten als dynamische Eigenschaften bestimmt und übertragen werden.

Insbesondere betrifft die dynamische Eigenschaft des Objektes mindestens eine der folgenden Eigenschaften des Objektes: Position und/oder Orientierung des Objektes; Sichtbarkeit des Objektes; Verknüpfung des Objektes mit einem weiteren Objekt; Lichtparameter des Objektes.

Die Position eines Objektes kann insbesondere durch einen Koordinatenvektor angegeben werden, insbesondere durch dreidimensionalen Koordinatenvektor. Hierfür können kartesische Koordinaten, Polarkoordinaten oder Kugelkoordinaten verwendet werden. Der Ursprung des Koordinatensystems kann hierbei räumlich fest zur ersten VR-Umgebung bzw. zur zweiten VR-Umgebung sein, alternativ kann der Ursprung des Koordinatensystems auch auf einer Nutzerposition in der ersten VR-Umgebung basieren. Die Orientierung eines Objektes kann ebenfalls durch einen dreidimensionalen Richtungsvektor angegeben sein, oder durch die Festlegung von Eulerwinkeln.

Die Sichtbarkeit eines Objektes bestimmt insbesondere, ob ein Objekt in einer VR-Umgebung angezeigt wird. Die Sichtbarkeit eines Objektes kann hierbei insbesondere mittels eines binären Wertes angegeben werden.

Ein erstes Objekt kann mit einem zweiten Objekt verknüpft sein, so dass dynamische Eigenschaften des ersten Objektes aus dynamischen Eigenschaften des zweiten Objektes abgeleitet werden können. Insbesondere kann die Position und/oder Orientierung des ersten Objektes durch die Position und/oder Orientierung des zweiten Objektes gegeben sein.

Ein Lichtparameter eines Objektes kann insbesondere angeben, ob ein Objekt aktiv Licht aussendet, und/oder wie sich ein Objekt unter Beleuchtung verhält. Der Lichtparameter eines Objektes kann insbesondere umfassen, ob das Objekt Licht aussendet, in welche Raumrichtung und mit welcher Intensität das Objekt Licht aussendet, und/oder welche sonstigen Eigenschaften (z.B. Wellenlänge, Farbe) das ausgesendete Licht aufweist. Der Lichtparameter kann auch betreffen, ob und in welcher Intensität das Objekt Licht reflektiert (z.B. Spiegelreflexion, diffuse Reflexion).

Der Erfinder hat erkannt, dass die genannten Eigenschaften zum einen besonders häufig durch Interaktion mit einem Nutzer verändert werden, und dass die genannten Eigenschaften insbesondere durch kleine Datengrößen beschrieben werden können. Beispielsweise sind für die Angabe der Position oder der Orientierung nur drei Zahlen notwendig, für die Angabe der Sichtbarkeit des Objektes ist nur ein binärer Wert notwendig, für die Angabe einer Verknüpfung mit einem weiteren Objekt ist nur der Bezeichner des weiteren Objektes notwendig, und für den Lichtparameter sind nur eine oder zwei Zahlen notwendig (beispielsweise Lichtstärke und Lichtfarbe).

Insbesondere betrifft der statische Objektdatensatz mindestens eine statische Eigenschaft des Objektes, wobei die statische Eigenschaft des Objektes nicht durch eine Interaktion eines Nutzers mit der ersten VR-Umgebung änderbar ist, insbesondere nicht durch die Interaktion eines Nutzers des Sendesystems mit der ersten VR-Umgebung mittels des Sendesystems bzw. mittels einer Eingabeeinheit des Sendesystems. Insbesondere ist eine statische Eigenschaft eines Objektes eine Eigenschaft des Objektes, welche nicht durch Interaktion eines Nutzers mit der ersten VR-Umgebung änderbar ist, insbesondere nicht durch Interaktion eines Nutzers des Sendesystems mit der ersten VR-Umgebung mittels des Sendesystems bzw. mittels der Eingabeeinheit des Sendesystems.

Der Erfinder hat erkannt, dass die durch den Nutzer unveränderbaren Eigenschaften von Objekten diejenigen Eigenschaften sind, die sich in einer VR-Umgebung nicht ändern. Daher kann eine VR-Umgebung besonderes effizient übertragen werden, indem die durch den Nutzer unveränderbaren Eigenschaften von Objekten als statische Eigenschaften bestimmt und nur einmalig übertragen werden.

Insbesondere betrifft die statische Eigenschaft mindestens eine der folgenden Eigenschaften des Objektes: räumliches Model des Objektes; eine oder mehrere Texturen des Objektes; konstante physikalische Eigenschaft des Objektes.

Ein räumliches Modell des Objektes ist insbesondere eine Darstellung des Objektes basierend auf einer Sammlung von Punkten im dreidimensionalen Raum, wobei die Punkte insbesondere durch dreidimensionale Koordinaten charakterisiert sein können, und wobei die Punkte insbesondere durch geometrische Objekte wie Dreiecke, Polygone, Linien oder gekrümmte Oberflächen verbunden sein. Ein räumliches Modell kann insbesondere von Hand, algorithmisch oder durch das Abtasten eines realen Objektes erstellt werden.

Eine Textur ist insbesondere ein zweidimensionales Bild, das auf der Oberfläche eines dreidimensionalen virtuellen Objektes dargestellt werden kann. Hierbei kann das zweidimensionale Bild insbesondere transformiert werden (ein englischer Fachbegriff ist "texture mapping", eine deutsche Übersetzung ist "Musterabbildung"). Hierbei kann es insbesondere notwendig sein, Werte des zugeordneten zweidimensionalen Bildes zu interpolieren.

Eine konstante physikalische Eigenschaft eines Objektes ist insbesondere eine Eigenschaft, welche einen Einfluss auf die Bewegung des Objektes hat, gleichzeitig aber zeitlich nicht veränderlich ist. Beispiele für solche konstanten physikalischen Eigenschaften von Objekten sind die Masse eines Objektes (wobei die Masse die Beschleunigung des Objektes als Reaktion auf eine wirkende Kraft bestimmt), der Trägheitstensor eines Objektes, welcher die Reaktion des Objektes auf ein wirkendes Drehmoment beschreibt, oder elastische Konstanten (Kompressionsmodul, Elastizitätsmodul, Schubmodul, Poissonzahl, Longitudinalmodul, Lamé-Konstante) eines Objektes, welche die Verformung eines Objektes als Reaktion auf wirkenden Kräfte bestimmen.

Die Erfinder haben erkannt, dass diese Eigenschaften insbesondere durch den Nutzer unveränderbar sind, und gleichzeitig nur durch große Datenmengen beschrieben werden können. Daher ist es besonders vorteilhaft, diese Eigenschaften als statischen Objektdatensatz zu übertragen. Beispielsweise wird das räumliche Modell durch eine Anzahl von Punkte beschrieben, die proportional zum Produkt der Oberfläche bzw. dem Volumen des Objektes mit der Oberflächenauflösung bzw. der Volumenauflösung des Objektes ist. Eine Textur wird durch eine Anzahl von Pixel beschrieben, die proportional zur Oberfläche des Objektes und der Flächenauflösung der Textur ist.

Erfindungsgemäß umfasst das Verfahren weiterhin ein Empfangen einer ersten virtuellen Nutzerposition eines Nutzers in der ersten VR-Umgebung mittels des Sendesystems, ein Übermitteln der ersten virtuellen Nutzerposition vom Sendesystem zum Empfangssystem, und ein Bestimmen einer zweiten virtuellen Nutzerposition eines Nutzers in der zweiten VR-Umgebung basierend auf der ersten Nutzerposition, wobei das Bestimmen der ersten Darstellung und/oder der zweiten Darstellung des Objektes weiterhin auf der zweiten Nutzerposition basiert. Eine Nutzerposition kann insbesondere eine Position und/oder eine Orientierung umfassen.

Der Erfinder hat erkannt, dass durch die Übertragung der Position des Nutzers in der ersten VR-Umgebung auch die Position des Nutzers in der zweiten VR-Umgebung angepasst werden kann. Insbesondere kann also die zweite VR-Umgebung aus der korrekten Perspektive angezeigt werden.

Nach einer nicht von der Erfindung umfassten Ausgestaltung ist die zweite virtuelle Nutzerposition die zur ersten virtuellen Nutzerposition äquivalente Nutzerposition in der zweiten VR-Umgebung. Der Erfinder hat erkannt, dass durch die Verwendung einer äquivalenten Nutzerposition die Darstellung des Nutzers des Sendesystems besonders genau übertragen werden kann.

Erfindungsgemäß ist die zweite virtuelle Nutzerposition die zur ersten virtuellen Nutzerposition um einen konstanten Wert verschobene Nutzerposition in der zweiten VR-Umgebung. Der Erfinder hat erkannt, dass durch eine Verschiebung der Nutzerpositionen weitere vorteilhafte Perspektiven erzielt werden können (beispielsweise ein Blick über die Schulter oder eine Beobachtung von vorne).

Optional umfasst das Bestimmen der ersten Darstellung und/oder das Bestimmen der zweiten Darstellung ein Rendern des Objektes.

Ein Rendern eines Objektes ist insbesondere eine Erzeugung des Bildes des Objektes aus Rohdaten. Hierbei können die Rohdaten insbesondere statische und dynamische Eigenschaften des Objektes bestreffen. Ein anderes Wort für "Rendern" ist "Bildsynthese".

Der Erfinder hat erkannt, dass durch das Rendern aus dem Empfangssystem weniger Daten zwischen dem Sendesystem und dem Empfangssystem übertragen werden müssen. Weiterhin kann dadurch die Genauigkeit des Rendern an die Rechenkapazität des Empfangssystems angepasst werden.

Optional umfasst das Verfahren weiterhin ein Senden eines technischen Parameters des Empfangssystems an einen Server mittels des Empfangssystems, wobei die statische Eigenschaft an den technischen Parameter des Empfangssystems angepasst ist. Das Senden des technischen Parameters erfolgt insbesondere mittels der Schnittstelle des Empfangssystems.

Ein technischer Parameter des Empfangssystems ist insbesondere ein Parameter, der das Vermögen des Empfangssystems zur Bestimmung einer Darstellung beschreibt. Beispiele für den technischen Parameter sind eine Rechenkapazität (insbesondere eines Prozessors bzw. eines Graphikprozessors des Empfangssystems) oder Speicherkapazität (insbesondere einer Speichereinheit, eines Caches des Prozessors oder eines Caches des Graphikprozessors des Empfangssystems).

Der Erfinder hat erkannt, dass durch die Anpassung des statischen Objektparameters an den technischen Parameter an die Leistungsfähigkeit des Empfangssystems berücksichtigt werden kann, ohne die vom Sendesystem gesendeten Daten zu ändern. Insbesondere können die vom Sendesystem gesendeten Daten von verschiedenen Empfangssystemen mit unterschiedlicher Leistungsfähigkeit verarbeitet werden.

Optional umfasst das Verfahren weiterhin ein Bestimmen eines Bezeichners eines Objektes mittels des Sendesystems, ein Übermitteln des Bezeichners des Objekts vom Sendesystem an das Empfangssystem, und ein Senden des Bezeichners des Objekts an einen Server, wobei das Empfangen der statischen Objektdatensatz als Reaktion auf Senden des Bezeichners des Objekts ausgeführt wird.

Der Erfinder hat erkannt, dass durch das Übermitteln des Bezeichners vor dem Empfangen des statischen Objektdatensatzes dem Empfangssystem bekannt gemacht werden kann, welche Objekte für die Darstellung der zweiten VR-Umgebung verwendet werden müssen. Für diese notwendigen Objekte können dann die statischen Objektdatensätze an das Empfangssystem bereitgestellt werden. Hierdurch ist es einerseits nicht notwendig, proaktive alle verfügbaren statischen Objektdatensätze abzurufen, weiterhin ist es ebenfalls nicht notwendig, während der Darstellung des zeitlichen Ablaufs in der zweiten VR-Umgebung nachgelagert statische Objektdatensätze abzurufen. Dadurch wird zum einen die zu übertragende Datengröße reduziert, andererseits werden zeitliche Verzögerungen bei der Darstellung des zeitlichen Ablaufs in der zweiten Umgebung verhindert.

Optional umfasst das Verfahren weiterhin ein Senden einer Bildwiederholungsrate vom Empfangssystem an das Sendesystem, wobei das Sendesystem dynamische Objektdatensätze mit der Bildwiederholungsrate an das Empfangssystem übermittelt.

Eine Bildwiederholungsrate ist insbesondere eine Frequenz von Einzelbildern, die vom Sendesystem bzw. vom Empfangssystem zur Imitation eines zeitlich kontinuierlichen Videos angezeigt wird. Ein anderes Wort für "Bildwiederholungsrate" ist "Bildwiederholfrequenz". Das Sendesystem kann insbesondere dynamische Objektdatensätze mit einer gegebenen Bildwiederholungsrate an das Empfangssystem übermitteln, indem jeweils nach einem Zeitintervall ein oder mehrere neue dynamische Objektdatensätze übermittelt werden, wobei das Zeitintervall der Kehrwert der Bildwiederholungsrate ist.

Die Erfinder haben erkannt, dass durch das Übermitteln der Bildwiederholungsrate vom Empfangssystem an das Sendesystem insbesondere die maximale Bildwiederholungsrate des Empfangssystems dem Sendesystem bekannt gemacht werden kann. Dadurch kann das Sendesystem gegebenenfalls seine Bildwiederholungsrate auf die vom Empfangssystem vorgegebene Bildwiederholungsrate reduzieren. Dadurch kann insbesondere die zu überragende Datengröße reduziert werden. Dieser Vorteil ist insbesondere wirksam, wenn das Verfahren zum Streaming eingesetzt wird.

Optional umfasst der erste dynamische Objektdatensatz und/oder der zweite dynamische Objektdatensatz eine Zeitinformation, wobei das Bestimmen des ersten Zustands und/oder des zweiten Zustands der zweiten VR-Umgebung auf dynamischen Objektdatensätzen bezüglich verschiedener Zeitinformationen basiert.

Die Erfindung betrifft weiterhin ein Übertragungssystem gemäß Anspruch 11 zum Übertragen eines Zustandes von einer ersten VR-Umgebung zu einer zweiten VR-Umgebung, umfassend:
- Sendesystem, ausgebildet zum Bestimmen eines ersten dynamischen Objektdatensatzes bezüglich eines Objektes, wobei das Objekt in der durch das Sendesystem generierten ersten VR-Umgebung darstellbar ist, wobei der erste dynamische Objektdatensatz eine dynamische Eigenschaft des Objektes in der ersten VR-Umgebung betrifft,
- Empfangssystem, ausgebildet zum Empfangen eines statischen Objektdatensatzes bezüglich des Objektes, wobei das Objekt in der durch das Empfangssystem generierten zweiten VR-Umgebung darstellbar ist,

weiterhin ausgebildet zum Bestimmen eines ersten Zustands der zweiten VR-Umgebung basierend auf dem statischen Objektdatensatz und dem ersten dynamischen Objektdatensatz;
wobei das Übertragungssystem weiterhin zum Übermitteln des ersten dynamischen Objektdatensatzes vom Sendesystem zum Empfangssystem ausgebildet ist.

Die Erfindung kann auch ein Sendesystem betreffen, insbesondere zur Verwendung in einem Übertragungssystem zum Übertragen eines Zustands von einer ersten VR-Umgebung zu einer zweiten VR-Umgebung, ausgebildet zum Bestimmen eines ersten dynamischen Objektdatensatzes bezüglich des Objektes, wobei das Objekt in der durch das Sendesystem generierten ersten VR-Umgebung darstellbar ist, wobei der erste dynamische Objektdatensatz eine dynamische Eigenschaft des Objektes in der ersten VR-Umgebung betrifft, weiterhin optional ausgebildet zum Senden eines statischen Objektdatensatzes bezüglich des Objektes an ein Empfangssystem, wobei das Objekt in der durch das Empfangssystem generierten zweiten VR-Umgebung darstellbar ist, und weiterhin ausgebildet zum Senden des ersten dynamischen Objektdatensatzes an das Empfangssystem.

Die Erfindung kann auch ein Empfangssystem betreffen, insbesondere zur Verwendung in einem Übertragungssystem zum Übertragen eines Zustands von einer ersten VR-Umgebung zu einer zweiten VR-Umgebung, ausgebildet zum Empfangen eines statischen Objektdatensatzes bezüglich eines Objektes, wobei das Objekt in der durch das Empfangssystem generierten zweiten VR-Umgebung darstellbar ist, weiterhin ausgebildet zum Empfange eines ersten dynamischen Objektdatensatzes bezüglich des Objektes von einem Sendesystem, wobei das Objekt in der durch das Sendesystem generierten ersten VR-Umgebung darstellbar ist, wobei der erste dynamische Objektdatensatz eine dynamische Eigenschaft des Objektes in der ersten VR-Umgebung betrifft, weiterhin ausgebildet zum Bestimmen eines ersten Zustands der zweiten VR-Umgebung basierend auf dem statischen Objektdatensatz und dem ersten dynamischen Objektdatensatz.

Ein solches Übertragungssystem, ein solches Sendesystem und ein solches Empfangssystem können insbesondere dazu ausgebildet sein, die zuvor beschriebenen erfindungsgemäßen Verfahren und ihre Aspekte auszuführen. Das Übertragungssystem ist dazu ausgebildet, diese Verfahren und ihre Aspekte auszuführen, indem das Sendesystem und das Empfangssystem dazu ausgebildet sind, die entsprechenden Verfahrensschritte auszuführen.

Die Erfindung betrifft auch ein Computerprogrammprodukt gemäß Anspruch 12 mit einem Computerprogramm sowie ein computerlesbares Medium gemäß Anspruch 13. Eine weitgehend softwaremäßige Realisierung hat den Vorteil, dass auch schon bisher verwendete Übertragungssysteme auf einfache Weise durch ein Software-Update nachgerüstet werden können, um auf die erfindungsgemäße Weise zu arbeiten. Ein solches Computerprogrammprodukt kann neben dem Computerprogramm gegebenenfalls zusätzliche Bestandteile wie z. B. eine Dokumentation und/oder zusätzliche Komponenten, sowie Hardware-Komponenten, wie z.B. Hardware-Schlüssel (Dongles etc.) zur Nutzung der Software, umfassen.

Die Erfindung betrifft weiterhin eine computerimplementierte Datenstruktur gemäß Anspruch 14 zur Anwendung in einem Verfahren zum Übertragen eines Zustands von einer ersten VR-Umgebung zu einer zweiten VR-Umgebung oder in einem Übertragungssystem. Die Datenstruktur umfasst hierbei eine statische Teildatenstruktur und eine dynamischen Teildatenstruktur, wobei die statische Teildatenstruktur statische Objektdatensätze bezüglich Objekten betrifft, wobei die dynamische Teildatenstruktur dynamische Objektdatensätze bezüglich der Objekte umfasst, und wobei der Zustand einer VR-Umgebung basierend auf den statischen Objektdatensätzen und den dynamischen Objektdatensätzen darstellbar ist.

Der Erfinder hat erkannt, dass durch diese Datenstruktur die bereits aufgeführten Vorteile des Verfahrens zum Übertragen eines Zustands realisiert werden.

Optional sind die statische Teildatenstruktur und die dynamische Teildatenstruktur unabhängig voneinander übertragbar sind.

Der Erfinder hat erkannt, dass durch die Verwendung von unabhängig voneinander übertragbaren statischen und dynamischen Teildatenstrukturen die Datenstruktur insbesondere zur Liveübertragung eingesetzt werden kann, indem die statische Teildatenstruktur vor Beginn der Liveübertragung übertragen wird, und die dynamischen Teildatenstrukturen während der Liveübertragung gesendet werden können.

Optional umfasst die statische Teildatenstruktur eine Objektliste, wobei jedes Element der Objektliste einen Bezeichner eines Objektes, und mindestens einen statischen Objektdatensatz bezüglich des Objektes und/oder mindestens einen Verweis auf einen statischen Objektdatensatz bezüglich des Objektes umfasst. Hierbei umfasst ein statischer Objektdatensatz bezüglich eines Objektes mindestens eine statische Eigenschaft des Objektes, wobei die statische Eigenschaft des Objektes nicht durch eine Interaktion eines Nutzers mit einer VR-Umgebung änderbar ist.

Optional umfasst die dynamische Teildatenstruktur eine Ereignisliste, wobei jedes Element der Ereignisliste eine Zeitinformation, einen Bezeichner eines Objektes, und mindestens einen dynamischen Objektdatensatz bezüglich des Objektes umfasst. Insbesondere ist eine dynamische Eigenschaft bezüglich eines Objektes durch eine Interaktion eines Nutzers mit einer VR-Umgebung änderbar.

Insbesondere gilt für jedes Paar umfassend ein erstes Element der Ereignisliste und ein zweites Element der Ereignisliste, dass sich der dynamische Objektdatensatz des ersten Elements von dem dynamischen Objektdatensatz des zweiten Elements unterscheidet, wenn der Bezeichner des Objektes des ersten Elements und der Bezeichner des Objekts des zweiten Elements identisch sind, und wenn kein drittes Element der Ereignisliste eine Zeitinformation zwischen der Zeitinformation des ersten Elements und der Zeitinformation des zweiten Elements sowie den Bezeichner des Objektes des ersten Elements aufweist.

Die Erfindung betrifft weiterhin ein computerimplementiertes Verfahren nach Anspruch 15 zum Bestimmen eines Zustands eines Objektes in einer zweiten VR-Umgebung, umfassend ein Empfangen eines statischen Objektdatensatzes bezüglich des Objektes, wobei das Objekt in der mittels eines Empfangssystems generierbaren zweiten VR-Umgebung darstellbar ist. Das Verfahren umfasst weiterhin ein Empfangen eines ersten dynamischen Objektdatensatzes bezüglich des Objektes, wobei der erste dynamische Objektdatensatz eine dynamische Eigenschaft des Objektes in einer ersten VR-Umgebung betrifft. Das Verfahren umfasst weiterhin ein Bestimmen eines ersten Zustandes des Objektes in der zweiten VR-Umgebung basierend auf dem statischen Objektdatensatz und dem ersten dynamischen Objektdatensatz.

Die einzelnen Schritte des beschriebenen Verfahrens werden insbesondere mittels des Empfangssystems ausgeführt. Das Verfahren zum Bestimmen eines Zustandes eines Objektes in einer zweiten VR-Umgebung ist insbesondere der Teil des Verfahrens zum Übertragen des Zustands des Objekts von einer ersten VR-Umgebung zu der zweiten VR-Umgebung, der auf dem Empfangssystem durchgeführt wird. Das Verfahren zum Bestimmen des Zustands des Objektes kann daher insbesondere alle vorteilhaften Aus- und Weiterbildungen des Verfahrens zum Übertragen des Zustandes aufweisen.

Nach einem weiteren möglichen Aspekt der Erfindung umfasst das Verfahren zum Bestimmen eines Zustands eines Objektes in einer zweiten VR-Umgebung weiterhin ein Empfangen eines zweiten dynamischen Objektdatensatzes bezüglich des Objektes, wobei der erste dynamische Objektdatensatz die dynamische Eigenschaft des Objektes zu einem ersten Zeitpunkt in der ersten VR-Umgebung betrifft, wobei der zweite dynamische Objektdatensatz die dynamische Eigenschaft des Objektes zu einem zweiten Zeitpunkt in der ersten VR-Umgebung betrifft. Weiterhin umfasst das Verfahren zum Bestimmen eines Zustands eines Objektes in einer zweiten VR-Umgebung ein Bestimmen eines zweiten Zustands der zweiten VR-Umgebung basierend auf dem statischen Objektdatensatz und dem zweiten dynamischen Objektdatensatz.

Nach einem weiteren möglichen Aspekt der Erfindung ist im Verfahren zum Bestimmen eines Zustands eines Objektes in einer zweiten VR-Umgebung die dynamische Eigenschaft des Objektes durch eine Interaktion eines Nutzers mit der ersten VR-Umgebung änderbar.

Nach einem weiteren möglichen Aspekt der Erfindung betrifft im Verfahren zum Bestimmen eines Zustands eines Objektes in einer zweiten VR-Umgebung die dynamische Eigenschaft des Objektes mindestens eine der folgenden Eigenschaften des Objektes: Position und/oder Orientierung des Objektes, Sichtbarkeit des Objektes, Verknüpfung des Objektes mit einem weiteren Objekt, und/oder Lichtparameter des Objektes.

Nach einem weiteren möglichen Aspekt der Erfindung betrifft im Verfahren zum Bestimmen eines Zustands eines Objektes in einer zweiten VR-Umgebung der statische Objektdatensatz mindestens eine statische Eigenschaft des Objektes, wobei die statische Eigenschaft des Objektes nicht durch eine Interaktion eines Nutzers mit der ersten VR-Umgebung änderbar ist.

Nach einem weiteren möglichen Aspekt der Erfindung betrifft im Verfahren zum Bestimmen eines Zustands eines Objektes in einer zweiten VR-Umgebung die statische Eigenschaft mindestens eine der folgenden Eigenschaften des Objektes: räumliches Model des Objektes, eine oder mehrere Texturen des Objektes, und/oder konstante physikalische Eigenschaft des Objektes.

Erfindungsgemäß umfasst das Verfahren zum Bestimmen eines Zustands eines Objektes in einer zweiten VR-Umgebung weiterhin ein Empfangen einer ersten virtuellen Nutzerposition eines Nutzers in der ersten VR-Umgebung, sowie ein Bestimmen einer zweiten virtuellen Nutzerposition eines Nutzers in der zweiten VR-Umgebung basierend auf der ersten Nutzerposition, wobei das Bestimmen des ersten Zustands und/oder des zweiten Zustandes der zweiten VR-Umgebung weiterhin auf der zweiten Nutzerposition basiert.

Nach einem weiteren möglichen Aspekt der Erfindung umfasst im Verfahren zum Bestimmen eines Zustands eines Objektes in einer zweiten VR-Umgebung das Bestimmen des ersten Zustandes und/oder das Bestimmen des zweiten Zustandes der zweiten VR-Umgebung ein Rendern des Objektes.

Nach einem weiteren möglichen Aspekt der Erfindung umfasst das Verfahren zum Bestimmen eines Zustands eines Objektes in einer zweiten VR-Umgebung weiterhin ein Senden eines technischen Parameters des Empfangssystems an einen Server, wobei der statische Objektdatensatz an den technischen Parameter des Empfangssystems angepasst ist.

Nach einem weiteren möglichen Aspekt der Erfindung umfasst das Verfahren zum Bestimmen eines Zustands eines Objektes in einer zweiten VR-Umgebung weiterhin ein Empfangen eines Bezeichners des Objekts, sowie ein Senden des Bezeichners des Objekts an einen Server, wobei das Empfangen des statischen Objektdatensatzes als Reaktion auf Senden des Bezeichners des Objekts ausgeführt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Durch diese Beschreibung erfolgt keine Beschränkung der Erfindung auf diese Ausführungsbeispiele. In verschiedenen Figuren sind gleiche Komponenten mit identischen Bezugszeichen versehen. Die Figuren sind in der Regel nicht maßstäblich. Es zeigen:
- Fig. 1: zeigt verschiedene Zustände einer VR-Umgebung,
- Fig. 2: zeigt eine Datenstruktur umfassend eine statische Teildatenstruktur und mehrere dynamische Teildatenstrukturen,
- Fig. 3: zeigt ein Flussdiagramm eines ersten Ausführungsbeispiels eines Verfahrens zum Übertragen eines Zustands von einer ersten VR-Umgebung zu einer zweiten VRUmgebung,
- Fig. 4: zeigt ein Flussdiagramm eines zweiten Ausführungsbeispiels eines Verfahrens zum Übertragen eines Zustands von einer ersten VR-Umgebung zu einer zweiten VR-Umgebung,
- Fig. 5: zeigt ein Flussdiagramm eines dritten Ausführungsbeispiels eines Verfahrens zum Übertragen eines Zustands von einer ersten VR-Umgebung zu einer zweiten VR-Umgebung,
- Fig. 6: zeigt ein Flussdiagramm eines vierten Ausführungsbeispiels eines Verfahrens zum Übertragen eines Zustands von einer ersten VR-Umgebung zu einer zweiten VR-Umgebung,
- Fig. 7: zeigt ein Datenflussdiagramm des in Fig. 6 dargestellten Ausführungsbeispiels des Verfahrens,
- Fig. 8: zeigt ein Blockdiagramm eines Übertragungssystems.

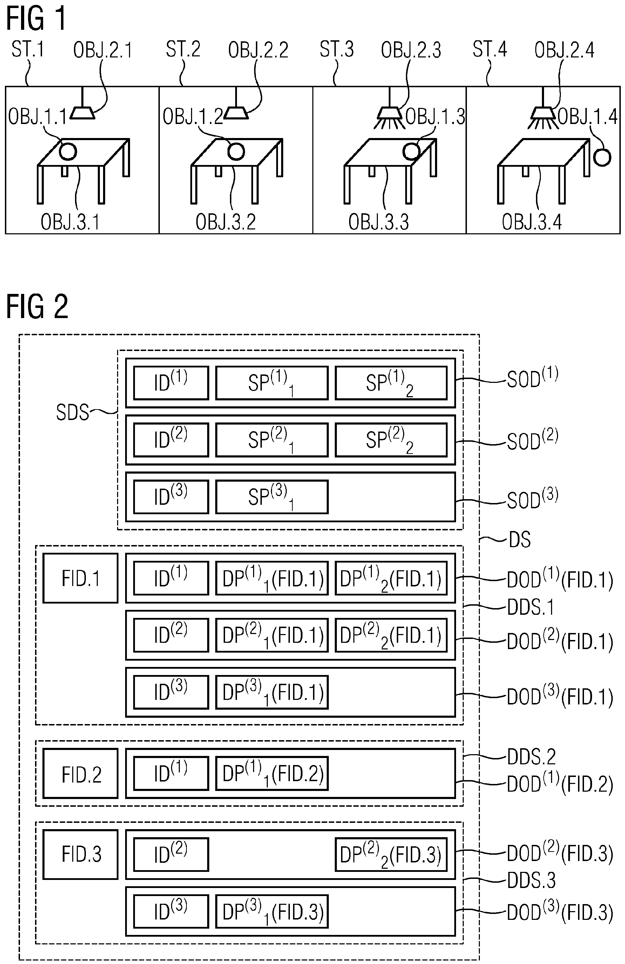

Fig. 1 zeigt verschiedene Zustände ST.1, ..., ST.4 einer VR-Umgebung. Bei der VR-Umgebung kann es sich sowohl um die erste VR-Umgebung als auch um die zweite VR-Umgebung handeln.

Die Zustände ST.1, ..., ST.4 können auch mit Einzelbildern (ein englischer Fachbegriff ist "frame" bzw. "video frame") eines zeitlichen Ablaufs der VR-Umgebung aufgefasst werden.

Die VR-Umgebung umfasst im dargestellten Ausführungsbeispiel einen Ball als erste Objekt OBJ.1, eine Lampe als zweite Objekt OBJ.2 und einen Tisch als drittes Objekt OBJ.3.

Hierbei bewegt sich das erste Objekt OBJ.1 zwischen den einzelnen Zuständen ST.1, ..., ST.4 der VR-Umgebung, der Ball hat also unterschiedliche Positionen und/oder Geschwindigkeiten, und wird daher in den einzelnen Zuständen ST.1, ..., ST.4 der VR-Umgebung durch unterschiedliche dynamische Eigenschaften charakterisiert.

Das zweite Objekt OBJ.2 sendet im ersten Zustand ST.1 und im zweiten Zustand ST.2 der VR-Umgebung kein Licht aus, während das zweite Objekt OBJ.2 im dritten Zustand ST.3 und im vierten Zustand ST.4 der VR-Umgebung Licht ausstrahlt. Die Lampe hat also unterschiedliche Lichtparameter, und wird daher in den ersten beiden Zuständen ST.1, ST.2 durch andere dynamische Eigenschaften charakterisiert als in den zweiten beiden Zuständen ST.3, ST.4.

Das dritte Objekt OBJ.3 verändert seine dynamischen Eigenschaften nicht zwischen den Zuständen ST.1, ..., ST.4 der VR-Umgebung.

Fig. 2 zeigt eine Datenstruktur DS umfassend eine statische Teildatenstruktur SDS und mehrere dynamische Teildatenstrukturen DDS.1, DDS.2, DDS.3. Hierbei umfasst die statische Teildatenstruktur SDS statische Objektdatensätze SOD⁽¹⁾, SOD⁽²⁾, SOD⁽³⁾, und die dynamischen Teildatenstrukturen DDS.1, DDS.2, DDS.3 umfassen dynamische Objektdatensätze DOD⁽¹⁾(FID.1), DOD⁽²⁾(FID.1), DOD⁽³⁾(FID.1), DOD⁽¹⁾(FID.2), DOD⁽²⁾(FID.3), DOD⁽³⁾(FID.3). Die Datenstruktur DS ist an die in der Fig. 1 dargestellte VR-Umgebung bzw. deren Zustände angelehnt, gibt diese aber nicht exakt wieder.

Die statischen Objektdatensätze SOD⁽¹⁾,..., SOD⁽³⁾ umfassen hierbei jeweils einen Bezeichner ID⁽¹⁾, ID⁽²⁾, ID⁽³⁾ eines Objektes und eine oder mehrere statische Eigenschaften SP⁽¹⁾₁, SP⁽¹⁾₂, SP⁽²⁾₁, SP⁽²⁾₂, SP⁽³⁾₁ der jeweiligen Objekte OBJ.1, ..., OBJ.3. (Hierbei wird die Konvention verwendet, dass die statische Objektdatensätze SOD⁽ⁱ⁾ das Objekt OBJ.1, ..., OBJ.3 mit dem Bezeichner ID⁽ⁱ⁾ betrifft, und den Bezeichner ID⁽ⁱ⁾ sowie eine oder mehrere statische Eigenschaften SP⁽ⁱ⁾ⱼ umfasst.) Der Bezeichner ID⁽¹⁾, ..., ID⁽³⁾ eines Objektes kann insbesondere eine dem Objekt OBJ.1, ..., OBJ.3 zugeordnete eindeutige Zahl oder Zeichenkette sein. Die statischen Eigenschaften SP⁽¹⁾₁, ..., SP⁽³⁾₁ sind hierbei Eigenschaften des jeweiligen Objektes OBJ.1, ..., OBJ.3, die nicht durch eine Interaktion eines Nutzers mit der ersten VR-Umgebung änderbar sind. Beispielsweise betrifft die statische Eigenschaft SP⁽¹⁾₁ das räumliches Model des Objektes OBJ.1 mit dem Bezeichner ID⁽¹⁾, die statische Eigenschaft SP⁽²⁾₂ kann eine oder mehrere Texturen des Objektes OBJ.2 mit dem Bezeichner ID⁽²⁾ betreffen, und die statische Eigenschaft SP⁽³⁾₁ kann eine konstante physikalische Eigenschaft des Objektes OBJ.3 mit dem Bezeichner ID⁽³⁾ betreffen, beispielsweise die Masse des Objektes OBJ.1, ..., OBJ.3.

In diesem Ausführungsbeispiel beschreiben die dynamischen Teildatenstrukturen DDS.1, ..., DDS.3 jeweils einen Frame, mit anderen Worten sind die dynamischen Objektdatensätze DOD⁽¹⁾(FID.1), ..., DOD⁽³⁾(FID.3) in Frames angeordnet. Hierbei umfasst eine erste dynamische Teildatenstruktur DDS.1 die dynamischen Objektdatensätze DOD⁽¹⁾(FID.1), ..., DOD⁽³⁾(FID.1), eine zweite dynamische Teildatenstruktur DDS.2 umfasst den dynamischen Objektdatensatz DOD⁽¹⁾(FID.2), und eine dritte dynamische Teildatenstruktur DDS.3 umfasst die dynamischen Objektdatensätze DOD⁽²⁾(FID.3), DOD⁽³⁾(FID.3) . (Hierbei wird die Konvention verwendet, dass die dynamische Teildatenstruktur DDS.k dynamische Objektdatensätze DOD⁽ⁱ⁾(FID.k) umfasst.)

Die dynamischen Teildatenstrukturen DDS.1, ..., DDS.3 umfassend weiterhin einen Bezeichner FID.1, ..., FID.3 des Frames, den sie beschreiben. Der Bezeichner FID.1, ..., FID.3 des Frames kann insbesondere ganzzahlig sein, oder eine Gleitkommazahl, welche die Zeitkoordinate des jeweiligen Frames bezeichnet.

Die einzelnen dynamischen Objektdatensätze DOD⁽¹⁾(FID.1), ..., DOD⁽³⁾(FID.3) umfassen jeweils einen Bezeichner ID⁽¹⁾, ID⁽²⁾, ID⁽³⁾ eines Objektes OBJ.1, ..., OBJ.3 und eine oder mehrere dynamische Eigenschaften DP⁽¹⁾₁(FID.1), DP⁽¹⁾₂(FID.1), DP⁽²⁾₁(FID.1), DP⁽²⁾₂(FID.1), DP⁽³⁾₁(FID.1), DP⁽¹⁾₁(FID.2), DP⁽²⁾₂(FID.3), DP⁽³⁾₁(FID.3). Beispielsweise umfasst der dynamische Objektdatensatz DOD⁽¹⁾(FID.1) den Bezeichner ID⁽¹⁾ des ersten Objektes OBJ.1 und zwei dynamische Eigenschaften DP⁽¹⁾₁(FID.1), DP⁽¹⁾₂(FID.1). Dadurch, dass die zwei dynamischen Eigenschaften DP⁽¹⁾₁(FID.1), DP⁽¹⁾₂(FID.1) und der Bezeichner ID⁽¹⁾ des ersten Objektes OBJ.1 Teile des gleichen dynamischen Objektdatensatzes DOD⁽¹⁾(FID.1) sind, sind die zwei dynamischen Eigenschaften DP⁽¹⁾₁(FID.1), DP⁽¹⁾₂(FID.1) dynamische Eigenschaften des ersten Objektes OBJ.1 mit dem Bezeichner ID⁽¹⁾ im Frame mit dem Bezeichner FID.1. (Hierbei wird die Konvention verwendet, dass die dynamische Eigenschaft DP⁽ⁱ⁾ⱼ (FID.k) die j-te dynamische Eigenschaft des Objektes OBJ.1, ..., OBJ.3 mit dem Bezeichner ID⁽ⁱ⁾ im Frame mit dem Bezeichner FID.k ist.)

In diesem Ausführungsbeispiel sind die dynamischen Eigenschaften DP⁽¹⁾₁(FID.1), ..., DP⁽³⁾₁(FID.3) der Objekte OBJ.1, ..., OBJ.3 durch eine Interaktion eines Nutzers mit der ersten VR-Umgebung änderbar. Beispielsweise kann eine dynamische Eigenschaft DP⁽¹⁾₁(FID.1), ..., DP⁽³⁾₁(FID.3) die Position des Objektes OBJ.1, ..., OBJ.3, die Orientierung des Objektes, die Sichtbarkeit des Objektes OBJ.1, ..., OBJ.3, die Verknüpfung des Objektes OBJ.1, ..., OBJ.3 mit einem weiteren Objekt OBJ.1, ..., OBJ.3, und/oder Lichtparameter des Objektes OBJ.1, ..., OBJ.3 betreffen bzw. bestimmen.

| Tabelle A: Pseudocode zur Fig. 2 | |
|---|---|
| A.1 | <header> |
| A.2 | <object id=1 mod=ball.3d texture=rubber red.tx /> |
| A.3 | <object id=2 mod=lamp.3d texture=cloth blue.tx /> |
| A.4 | <object id=3 mod=table.3d /> |
| A.5 | </header> |
| A.6 | <body> |
| A.7 | <frame id=0> |
| A.8 | <object id=1 pos=(0.0,0.0,0.0) vel=(1.0,0.0,0.0)/> |
| A.9 | <object id=2 pos=(0.0,0.0,1.0) light=0 /> |
| A.10 | <object id=3 pos=(0.0,0.0,-1.0) /> |
| A.11 | </frame> |
| A.12 | <frame id=50> |
| A.13 | <object id=1 pos=(1.0,0.0,0.0)/> |
| A.14 | </frame> |
| A.15 | <frame id=100> |
| A.16 | <object id=2 light=1 /> |
| A.17 | <object id=3 pos=(0.0,0.0,-1.0) /> |
| A.18 | </frame> |
| A.19 | </body> |

In der Tabelle A ist eine Umsetzung des in Fig. 2 dargestellten Ausführungsbeispiels einer Datenstruktur A in einen XML-ähnlichen Pseudocode dargestellt. In Zeilen A.1 bis A.5 ist das statische Teildatenstruktur SDS dargestellt, und in Zeilen A.6 bis A.19 sind die dynamischen Teildatenstrukturen DDS.1, ..., DDS.3 dargestellt. Hierbei ist die erste dynamische Teildatenstruktur DDS.1 in Zeilen A.7 bis A.11 dargestellt, die zweite dynamische Teildatenstruktur DDS.2 ist in Zeilen A.12 bis A.14 dargestellt, und die dritte dynamische Teildatenstruktur DDS.3 ist in Zeilen A.15 bis A.18 dargestellt.

Der erste statische Objektdatensatz SOD⁽¹⁾ ist in Zeile A.2 definiert. Er umfasst den Bezeichner ID⁽¹⁾ ("id=1") des ersten Objektes OBJ.1, sowie zwei statische Eigenschaften SP⁽¹⁾₂, SP⁽¹⁾₂, wobei die erste der zwei statischen Eigenschaften SP⁽¹⁾₁, SP⁽¹⁾₂ ein Dateiname ("mod=ball.3d") eines dreidimensionalen Modell des ersten Objektes OBJ.1 ist, und wobei die zweite der zwei statischen Eigenschaften SP⁽¹⁾₂, SP⁽¹⁾₂ ein Dateiname ("texture=rubber_red.tx") einer Textur des ersten Objektes OBJ.1 ist.

Der zweite statische Objektdatensatz SOD⁽²⁾ ist in Zeile A.3 definiert. Er umfasst den Bezeichner ID⁽²⁾ ("id=2") des zweiten Objektes OBJ.2, sowie zwei statische Eigenschaften SP⁽²⁾₁, SP⁽²⁾₂, wobei die erste der zwei statischen Eigenschaften SP⁽²⁾₁, SP⁽²⁾₂ ein Dateiname ("mod=lamp.3d") eines dreidimensionalen Modell des zweiten Objektes OBJ.2 ist, und wobei die zweite der zwei statischen Eigenschaften SP⁽²⁾₁, SP⁽²⁾₂ ein Dateiname ("texture= cloth_blue.tx") einer Textur des zweiten Objektes OBJ.2 ist.

Der dritte statische Objektdatensatz SOD⁽³⁾ ist in Zeile A.4 definiert. Er umfasst den Bezeichner ID⁽³⁾ ("id=3") des dritten Objektes OBJ.3, sowie eine statische Eigenschaften SP⁽³⁾₁ des dritten Objektes OBJ.3, wobei die statischen Eigenschaften SP⁽³⁾₁ ein Dateiname ("mod=table.3d") eines dreidimensionalen Modell des dritten Objektes OBJ.3 ist.

In diesem Ausführungsbeispiel sind die sowohl die dreidimensionalen Modell als auch die Texturen nur Verweise auf die bzw. Dateinamen der jeweils die Modelle oder die Texturen definierenden Datensätze. Alternativ können diese Datensätze auch direkt als statische Eigenschaften SP⁽¹⁾₁, ..., SP⁽³⁾₁ enthalten sein.

Die verschiedenen dynamischen Teildatenstrukturen DDS.1, ..., DDS.3 werden im Folgenden anhand der ersten dynamischen Teildatenstruktur DDS.1 erläutert, welches in den Zeilen A.7 bis A.11 enthalten ist. Die erste dynamische Teildatenstruktur DDS.1 umfasst in Zeile A.7 einen Bezeichner FID.1 eines ersten Frames ("id=0"), und beschreibt damit den ersten Zustand ST.1 einer VR-Umgebung. Diese Beschreibung erfolgt durch drei dynamische Objektdatensätze DOD⁽¹⁾(FID. 1), ..., DOD⁽³⁾(FID. 1) .

Der erste der drei dynamischen Objektdatensätze DOD⁽¹⁾(FID.1), ..., DOD⁽³⁾(FID.1) umfasst den Bezeichner ID⁽¹⁾ des ersten Objektes OBJ.1 ("id=1"), sowie die erste dynamische Eigenschaft DP⁽¹⁾₁(FID.1) ("pos=(0.0,0.0,0.0)"), welche die Position des ersten Objektes OBJ.1 in dem ersten Frame definiert, und die zweite dynamische Eigenschaft DP⁽¹⁾₂(FID.1) ("vel=(1.0,0.0,0.0)"), welche die Geschwindigkeit des ersten Objektes OBJ.1 in dem ersten Frame definiert.

Der zweite der drei dynamischen Objektdatensätze DOD⁽¹⁾(FID.1), ..., DOD⁽³⁾(FID. 1) umfasst den Bezeichner ID⁽²⁾ des zweiten Objektes OBJ.2 ("id=2"), sowie die erste dynamische Eigenschaft DP⁽²⁾₁(FID.1) ("pos=(0.0,0.0,1.0)"), welche die Position des zweiten Objektes OBJ.2 in dem ersten Frame definiert, und die zweite dynamische Eigenschaft DP⁽²⁾₂(FID.1) ("light=0"), welche definiert, dass das zweite Objekt OBJ.2 kein Licht aussendet.

Der dritte der drei dynamischen Objektdatensätze DOD⁽¹⁾(FID.1), ..., DOD⁽³⁾(FID.1) umfasst den Bezeichner ID⁽³⁾ des dritten Objektes OBJ.3 ("id=3"), sowie die erste dynamische Eigenschaft DP⁽³⁾₁(FID.1) ("pos=(0.0,0.0,-1.0)"), welche die Position des dritten Objektes OBJ.3 in dem ersten Frame definiert.

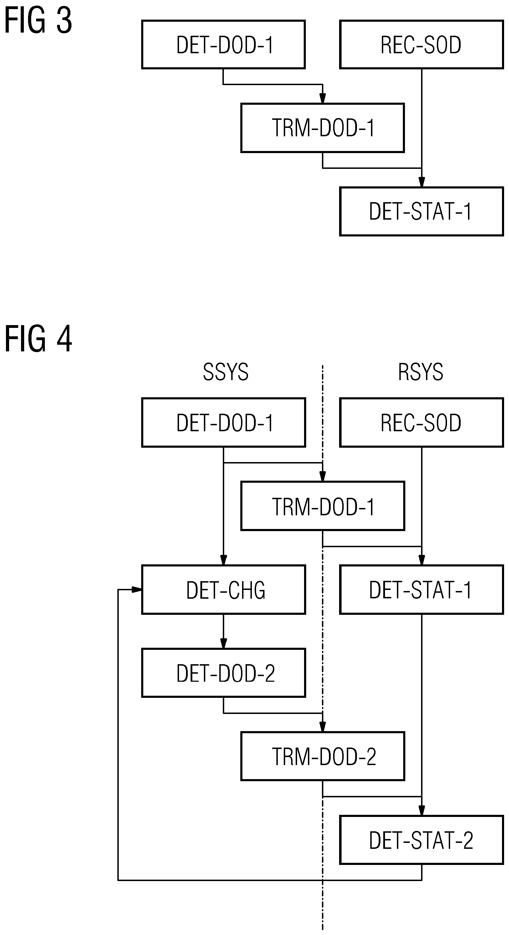

Fig. 3 zeigt ein Flussdiagramm eines ersten Ausführungsbeispiels eines Verfahrens zum Übertragen eines Zustands ST.1, ..., ST.4 von einer ersten VR-Umgebung zu einer zweiten VR-Umgebung.

Ein Schritt des ersten Ausführungsbeispiels ist das Empfangen REC-SOD eines statischen Objektdatensatzes SOD (1), ..., SOD⁽³⁾ bezüglich des Objektes OBJ.1, ..., OBJ.3 mittels eines Empfangssystems RSYS, wobei das Objekt OBJ.1, ..., OBJ.3 in einer durch ein Sendesystem SSYS generierten ersten VR-Umgebung und in der durch das Empfangssystem RSYS generierten zweiten VR-Umgebung darstellbar ist. Das Empfangen REC-SOD des statischen Objektdatensatzes SOD (1), ..., SOD⁽³⁾ erfolgt hierbei mittels der Schnittstelle RSYS.IF des Empfangssystems RSYS.

In diesem Ausführungsbeispiel betrifft der statische Objektdatensatz SOD⁽¹⁾, ..., SOD⁽³⁾ mindestens eine statische Eigenschaft SP⁽¹⁾₁, ..., SP⁽³⁾₁ des Objektes OBJ.1, ..., OBJ.3 betrifft, wobei die statische Eigenschaft SP⁽¹⁾₁, ..., SP⁽³⁾₁ des Objektes OBJ.1, ..., OBJ.3 nicht durch eine Interaktion eines Nutzers mit der ersten VR-Umgebung änderbar ist. Der statische Objektdatensatz SOD⁽¹⁾, ..., SOD⁽³⁾ betrifft die statische Eigenschaft SP⁽¹⁾₁, ..., SP⁽³⁾₁ des Objektes OBJ.1, ..., OBJ.3, indem der statische Objektdatensatz SOD⁽¹⁾, ..., SOD⁽³⁾ die statische Eigenschaft SP⁽¹⁾₁, ..., SP⁽³⁾₁ des Objektes OBJ.1, ..., OBJ.3 umfasst. Der statische Objektdatensatz SOD⁽¹⁾, ..., SOD⁽³⁾ umfasst in diesem Ausführungsbeispiel weiterhin einen Bezeichner ID⁽¹⁾, ..., ID⁽³⁾ des Objektes OBJ.1, ..., OBJ.3, dessen statische Eigenschaft SP⁽¹⁾₁, ..., SP⁽³⁾₁ er betrifft bzw. umfasst.

In diesem Ausführungsbeispiel kann eine statische Eigenschaft SP⁽¹⁾₁, ..., SP⁽³⁾₁ eines Objektes OBJ.1, ..., OBJ.3 insbesondere ein räumliches Model des Objektes OBJ.1, ..., OBJ.3, eine oder mehrere Texturen des Objektes OBJ.1, ..., OBJ.3, oder eine konstante physikalische Eigenschaft des Objektes OBJ.1, ..., OBJ.3 sein bzw. umfassen.

Im ersten Ausführungsbeispiel wird der statische Objektdatensatz SOD⁽¹⁾, ..., SOD⁽³⁾ vom Sendesystem SSYS an das Empfangssystem RSYS übermittelt bzw. gesendet. Alternativ kann der statische Objektdatensatz SOD⁽¹⁾, ..., SOD⁽³⁾ auch von einem Server SRV empfangen werden.

Ein weiterer Schritt des ersten Ausführungsbeispiels ist das Bestimmen DET-DOD-1 eines ersten dynamischen Objektdatensatzes DOD⁽¹⁾(FID.1) bezüglich des Objektes OBJ.1, ..., OBJ.3 mittels des Sendesystems SSYS, wobei der erste dynamische Objektdatensatz DOD⁽¹⁾(FID.1) eine dynamische Eigenschaft DP⁽¹⁾₁(FID.1), DP⁽¹⁾₂(FID.1) des Objektes OBJ.1, ..., OBJ.3 in der ersten VR-Umgebung betrifft. In diesem Ausführungsbeispiel wird die Erfindung anhand des ersten dynamischen Objektdatensatzes DOD⁽¹⁾(FID.1) erläutert, das Verfahren kann aber auch auf andere erste dynamische Objektdatensätze DOD⁽²⁾(FID.1), DOD⁽³⁾(FID.1), DOD⁽¹⁾(FID.2), DOD⁽²⁾(FID.3), DOD⁽³⁾(FID.3) angewendet werden.

Der erste dynamische Objektdatensatz DOD⁽¹⁾(FID.1) betrifft insbesondere dann eine dynamische Eigenschaft DP⁽¹⁾₁(FID.1), DP⁽¹⁾₂(FID.1), wenn der erste dynamische Objektdatensatz DOD⁽¹⁾(FID.1) die dynamische Eigenschaft DP⁽¹⁾₁(FID.1), DP⁽¹⁾₂(FID.1) umfasst. Der erste dynamische Objektdatensatz DOD⁽¹⁾(FID.1) umfasst insbesondere weiterhin einen Bezeichner ID⁽¹⁾ des Objektes OBJ.1, ..., OBJ.3, dessen dynamische Eigenschaft DP⁽¹⁾₂(FID. 1), DP⁽¹⁾₂(FID. 1) er betrifft bzw. umfasst.

In diesem Ausführungsbeispiel umfasst der erste dynamische Objektdatensatz DOD⁽¹⁾(FID.1) mehrere dynamische Eigenschaften DP⁽¹⁾₁(FID.1), DP⁽¹⁾₂(FID. 1) . Alternativ kann der erste dynamische Objektdatensatz DOD⁽¹⁾(FID.1) auch genau eine dynamische Eigenschaften DP⁽¹⁾₁(FID.1), DP⁽¹⁾₂(FID.1) umfassen. Weiterhin ist in dem dargestellten Ausführungsbeispiel der erste dynamische Objektdatensatz DOD⁽¹⁾(FID.1) Teil einer dynamischen Teildatenstruktur DDS.1, und die dynamische Teildatenstruktur DDS.1 umfasst neben dem ersten dynamischen Objektdatensatz DOD⁽¹⁾(FID.1) keinen weiteren ersten dynamischen Objektdatensatz, der den gleichen Bezeichner ID⁽¹⁾ wie der erste dynamische Objektdatensatz DOD⁽¹⁾(FID.1) aufweist. Alternativ, und insbesondere in dem Fall, dass der erste dynamische Objektdatensatz DOD⁽¹⁾(FID.1) genau eine dynamische Eigenschaften DP⁽¹⁾₁(FID.1), DP⁽¹⁾₂(FID.1) umfasst, können auch mehrere erste dynamische Objektdatensätze umfassend eine gleichen Bezeichner ID⁽¹⁾ Teil einer dynamischen Teildatenstruktur DDS.1 sein.

In diesem Ausführungsbeispiel ist die die dynamische Eigenschaft DP⁽¹⁾₁(FID.1), DP⁽¹⁾₂(FID.1) des Objektes OBJ.1, ..., OBJ.3 durch eine Interaktion eines Nutzers mit der ersten VR-Umgebung änderbar. Die Interaktion kann hierbei eine direkte Interaktion mit dem Objekt OBJ.1, ..., OBJ.3 sein (z.B. eine Bewegung des Objektes OBJ.1, ..., OBJ.3), oder eine indirekte Interaktion mit dem Objekt OBJ.1, ..., OBJ.3, wobei ein weiteres Objekt OBJ.1, ..., OBJ.3 mit dem Objekt OBJ.1, ..., OBJ.3 interagiert, und der Nutzer mit dem weiteren Objekt OBJ.1, ..., OBJ.3 direkt oder indirekt interagiert. In diesem Ausführungsbeispiel sind dynamische Eigenschaften DP⁽¹⁾₁(FID.1), DP⁽¹⁾₂(FID.1) des Objekts OBJ.1, ..., OBJ.3 beispielsweise die Position und/oder Orientierung des Objektes OBJ.1, ..., OBJ.3, die Sichtbarkeit des Objektes OBJ.1, ..., OBJ.3, eine Verknüpfung des Objektes mit einem weiteren Objekt OBJ.1, ..., OBJ.3, und/oder ein Lichtparameter des Objektes OBJ.1, ..., OBJ.3.

Ein weiterer Schritt des dargestellten Ausführungsbeispiels ist das Übermitteln TRM-DOD-1 des ersten dynamischen Objektdatensatzes DOD⁽¹⁾(FID.1) vom Sendesystem SSYS zum Empfangssystem RSYS. Das Übermitteln TRM-DOD-1 erfolgt hierbei mittels einer Schnittstelle SSYS.IF des Sendesystems SSYS und einer Schnittstelle RSYS.IF des Empfangssystems RSYS.

Der abschließende Schritt des dargestellten ersten Ausführungsbeispiels ist das Bestimmen DET-STAT-1 eines ersten Zustands ST.1, ..., ST.4 der zweiten VR-Umgebung basierend auf dem statischen Objektdatensatz SOD⁽¹⁾, ..., SOD⁽³⁾ und dem ersten dynamischen Objektdatensatz DOD⁽¹⁾(FID.1) mittels des Empfangssystems RSYS, insbesondere mittels einer Recheneinheit RSYS.CU des Empfangssystems RSYS und/oder einer Ausgabeeinheit RSYS.OU des Empfangssystems RSYS. Hierbei umfasst das Bestimmen DET-STAT-1 des ersten Zustands ST.1, ..., ST.4 der zweiten VR-Umgebung ein Rendern des Objekts OBJ.1, ..., OBJ.3 basierend auf dem statischen Objektdatensatz SOD⁽¹⁾, ..., SOD⁽³⁾ und dem ersten dynamischen Objektdatensatz DOD⁽¹⁾(FID.1), insbesondere basierend auf den im statischen Objektdatensatz SOD⁽¹⁾, ..., SOD⁽³⁾ enthaltenen statischen Eigenschaften SP⁽¹⁾₁, ..., SP⁽³⁾₁ und den im ersten dynamischen Objektdatensatz DOD⁽¹⁾(FID.1). enthaltenen dynamische Eigenschaften DP⁽¹⁾₁(FID.1), DP⁽¹⁾₂(FID.1) des Objektes OBJ.1, ..., OBJ.3.

Fig. 4 zeigt ein Flussdiagramm eines zweiten Ausführungsbeispiels eines Verfahrens zum Übertragen eines Zustands ST.1, ..., ST.4 von einer ersten VR-Umgebung zu einer zweiten VR-Umgebung. Das zweite Ausführungsbeispiel umfasst alle Schritte des ersten Ausführungsbeispiels, und kann insbesondere alle vorteilhaften Aus- und Weiterbildungen dieser Schritte aufweisen.

Das zweite Ausführungsbeispiel umfasst als zusätzlichen Schritt das Feststellen DET-CHG einer Änderung der dynamischen Eigenschaft DP⁽¹⁾₁(FID. 1), ..., DP⁽³⁾₁(FID. 3) des Objektes OBJ.1, ..., OBJ.3 mittels des Sendesystem SSYS. In diesem Ausführungsbeispiel werden die Positionen aller Objekte OBJ.1, ..., OBJ.3 der ersten VR-Umgebung mittels des Sendesystems SSYS ermittelt, beispielsweise durch eine Simulation der physikalischen Eigenschaften auf die jeweiligen Objekte OBJ.1, ..., OBJ.3. Dadurch kann insbesondere einfach ermittelt werden, für welche Objekte OBJ.1, ..., OBJ.3 sich dynamische Eigenschaften DP⁽¹⁾₁(FID. 1), ..., DP⁽³⁾₁(FID. 3) ändern (z.B. Aufgrund einer Interaktion mit dem Nutzer, oder durch das Wirken von Kräften). Alternativ kann das Sendesystem SSYS auch die dynamischen Eigenschaften DP⁽¹⁾₁(FID.1), ..., DP⁽³⁾₁(FID.3) aller Objekte OBJ.1, ..., OBJ.3 zu einem Zeitpunkt speichern, und die dynamischen Eigenschaften DP⁽¹⁾₁(FID.1), ..., DP⁽³⁾₁(FID.3) zu späteren Zeitpunkt ermitteln, und durch einen Vergleich der dynamischen Eigenschaften DP⁽¹⁾₁(FID.1), ..., DP⁽³⁾₁(FID.3) der beiden Zeitpunkte Änderungen in den dynamischen Eigenschaften DP⁽¹⁾₁(FID.1), ..., DP⁽³⁾₁(FID.3) feststellen.

Im Folgenden wird davon ausgegangen, dass ein Objekt OBJ.1 mit Bezeichner ID⁽¹⁾ in einem ersten Frame FID.1 eine erste dynamische Eigenschaft DP⁽¹⁾₁(FID.1) und in einem zweiten Frame FID.2) zweite dynamische Eigenschaft DP⁽¹⁾₁(FID.2) aufweist, wobei sich die erste dynamische Eigenschaft DP⁽¹⁾₁(FID.1) und die zweite dynamische Eigenschaft DP⁽¹⁾₁(FID.2) unterscheiden, und daher eine Änderung festgestellt wurde.

Das zweite Ausführungsbeispiel umfasst weiterhin das das Bestimmen DET-DOD-2 eines zweiten dynamischen Objektdatensatzes DOD⁽¹⁾(FID.2) bezüglich des Objektes OBJ.1 mittels des Sendesystems SSYS, wobei der zweite dynamische Objektdatensatz DOD⁽¹⁾(FID.2) eine dynamische Eigenschaft DP⁽¹⁾₁(FID.2) des Objektes OBJ.1 in der ersten VR-Umgebung betrifft. Hierbei erfolgt das Bestimmen DET-DOD-2 des zweiten dynamischen Objektdatensatzes DOD⁽¹⁾(FID.2) als Reaktion auf das Feststellen DET-CHG der Änderung der dynamischen Eigenschaft DP⁽¹⁾₁(FID.2) des Objektes OBJ.1 erfolgt, und insbesondere umfasst der zweite dynamische Objektdatensatz DOD⁽¹⁾(FID.2) die geänderte dynamische Eigenschaft DP⁽¹⁾₁(FID.2) des Objektes OBJ.1.

Der zweite dynamische Objektdatensatz DOD⁽¹⁾(FID.2) kann insbesondere alle vorteilhaften Aus- und Weiterbildungen umfassen, die für das erste Ausführungsbeispiel bezüglich des ersten dynamischen Objektdatensatzes DOD⁽¹⁾(FID.1) beschrieben wurden.

Ein weiterer Schritt des dargestellten zweiten Ausführungsbeispiels ist das Übermitteln TRM-DOD-2 des zweiten dynamischen Objektdatensatzes DOD⁽¹⁾(FID.2) vom Sendesystem SSYS zum Empfangssystem RSYS. Das Übermitteln TRM-DOD-2 erfolgt hierbei mittels der Schnittstelle SSYS.IF des Sendesystems SSYS und der Schnittstelle RSYS.IF des Empfangssystems RSYS.

Der abschließende Schritt des dargestellten zweiten Ausführungsbeispiels ist das Bestimmen DET-STAT-2 eines zweiten Zustands ST.1, ..., ST.4 der zweiten VR-Umgebung basierend auf dem statischen Objektdatensatz SOD⁽¹⁾, ..., SOD⁽³⁾ und dem zweiten dynamischen Objektdatensatz DOD⁽¹⁾(FID.2) mittels des Empfangssystems RSYS, insbesondere mittels der Recheneinheit RSYS.CU des Empfangssystems RSYS und/oder der Ausgabeeinheit RSYS.OU des Empfangssystems RSYS. Hierbei umfasst das Bestimmen DET-STAT-2 des zweiten Zustands ST.1, ..., ST.4 der zweiten VR-Umgebung ein Rendern des Objekts OBJ.1, ..., OBJ.3 basierend auf dem statischen Objektdatensatz SOD⁽¹⁾, ..., SOD⁽³⁾ und dem zweiten dynamischen Objektdatensatz DOD⁽¹⁾(FID.2), insbesondere basierend auf den im statischen Objektdatensatz SOD⁽¹⁾, ..., SOD⁽³⁾ enthaltenen statischen Eigenschaften SP⁽¹⁾₁, ..., SP⁽³⁾₁ und den im zweiten dynamischen Objektdatensatz DOD⁽¹⁾(FID.2) enthaltenen dynamische Eigenschaften DP⁽¹⁾₁(FID.2) des Objektes OBJ.1.

Im dargestellten zweiten Ausführungsbeispiel umfasst der zweite dynamische Objektdatensatz DOD⁽¹⁾(FID.2) nur dynamische Eigenschaften DP⁽¹⁾₁(FID.2) des Objektes OBJ.1, die bezüglich eines früheren Zustands ST.1, ..., ST.4 geändert wurden. Alternativ kann der zweite dynamische Objektdatensatz DOD⁽¹⁾(FID.2) weitere dynamische Eigenschaften des Objektes OBJ.1 umfassen, die bezüglich des früheren Zustands ST.1, ..., ST.4 nicht geändert wurden.

Nach dem Schritt des Bestimmens DET-STAT-2 des zweiten Zustands ST.1, ..., ST.4 der zweiten VR-Umgebung können optional erneut bzw. iterativ der Schritt des Feststellen DET-CHG einer Änderung der dynamischen Eigenschaft DP⁽¹⁾₁(FID.1), ..., DP⁽³⁾₁(FID.3) des Objektes OBJ.1, ..., OBJ.3 mittels des Sendesystem SSYS und alle folgenden Schritt ausgeführt werden, insbesondere bis alle dynamischen Eigenschaften DP⁽¹⁾₁(FID.1), ..., DP⁽³⁾₁(FID.3) aller Objekte OBJ.1, ..., OBJ.3 geprüft wurden, oder bis ein neuer Frame in der ersten VR-Umgebung vorliegt.

Vorteilhafterweise werden alle Änderungen von dynamischen Eigenschaften DP⁽¹⁾₁(FID.1), ..., DP⁽³⁾₁(FID.3), die sich innerhalb eines Frames ergeben, im Schritt des Bestimmens DET-DOD-2 eines dynamischen Objektdatensatzes DOD⁽¹⁾(FID.1), ..., DOD⁽³⁾(FID.3)in einem oder mehreren dynamischen Objektdatensätzen DOD⁽¹⁾(FID.1), ..., DOD⁽³⁾(FID.3) verarbeitet, die im Schritt des Übertragens TRM-DOD-2 gemeinsam vom Sendesystem SSYS an das Empfangssystem RSYS übertragen werden.

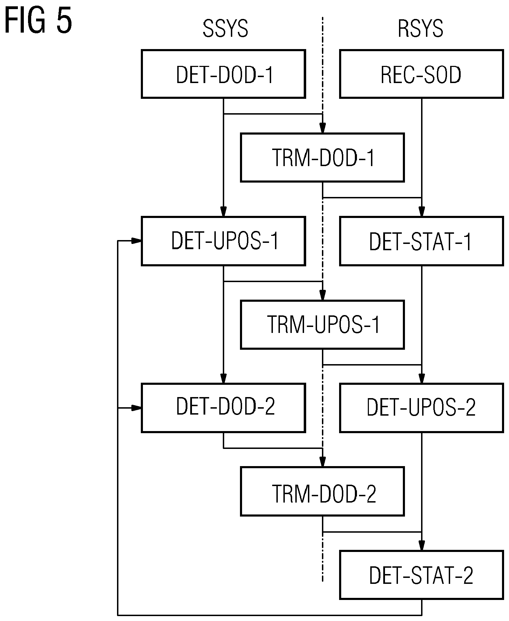

Fig. 5 zeigt ein Flussdiagramm eines dritten Ausführungsbeispiels eines Verfahrens zum Übertragen eines Zustands ST.1, ..., ST.4 von einer ersten VR-Umgebung zu einer zweiten VR-Umgebung. Das dritte Ausführungsbeispiel umfasst mehrere bzw. alle Schritte des ersten Ausführungsbeispiels und des zweiten Ausführungsbeispiels, und kann insbesondere alle vorteilhaften Aus- und Weiterbildungen dieser Schritte aufweisen.

Das dritte Ausführungsbeispiel umfasst insbesondere ein Bestimmen DET-UPOS-1 einer ersten virtuellen Nutzerposition eines Nutzers in der ersten VR-Umgebung mittels des Sendesystems SSYS, insbesondere mittels der Recheneinheit SSYS.CU des Sendesystems SSYS. Für das Bestimmen DET-UPOS-1 der ersten virtuellen Nutzerposition können insbesondere weitere Sensoren des Sendesystems SSYS herangezogen werden. Durch die Sensoren kann insbesondere eine reale Bewegung des Nutzers der ersten VR-Umgebung in eine virtuelle Bewegung bzw. eine virtuelle Position des ersten Nutzers in der ersten VR-Umgebung umgesetzt werden.

Das dritte Ausführungsbeispiel umfasst weiterhin ein Übermitteln TRM-UPOS-1 der ersten virtuellen Nutzerposition vom Sendesystem SSYS zum Empfangssystem RSYS, insbesondere unter Verwendung der Schnittstelle SSYS.IF des Sendesystems SSYS und der Schnittstelle RSYS.IF des Empfangssystems RSYS. Die erste virtuelle Nutzerposition kann insbesondere auch als dynamische Objektdatensatz DOD⁽¹⁾(FID.1), ..., DOD⁽³⁾(FID.3) eines Objektes OBJ.1, ..., OBJ.3 übertragen werden, insbesondere eines Objektes OBJ.1, ..., OBJ.3, das einen Nutzer in der ersten bzw. in der zweiten VR-Umgebung darstellt.

Das dritte Ausführungsbeispiel umfasst weiterhin ein Bestimmen DET-UPOS-2 einer zweiten virtuellen Nutzerposition eines Nutzers in der zweiten VR-Umgebung basierend auf der ersten Nutzerposition. In diesem Ausführungsbeispiel entspricht hierbei die zweite virtuelle Nutzerposition des Nutzers in der zweiten VR-Umgebung der ersten virtuellen Nutzerposition des Nutzers in der ersten VR-Umgebung (ein englischer Fachbegriff ist "first person view"). Alternativ kann die zweite virtuelle Nutzerposition des Nutzers in der zweiten VR-Umgebung auch durch einen konstanten Versatz der ersten virtuellen Nutzerposition des Nutzers in der ersten VR-Umgebung hervorgehen, hierbei kann der Nutzer der zweiten VR-Umgebung insbesondere auch den Nutzer der ersten VR-Umgebung als Objekt OBJ.1, ..., OBJ.3 wahrnehmen (ein englischer Fachbegriff ist "third person view")

Im dritten Ausführungsbeispiel basiert hierbei das Bestimmen DET-STAT-1, DET-STAT-2 des ersten Zustandes und/oder des zweiten Zustandes ST.1, ..., ST.4 der zweiten VR-Umgebung weiterhin auf der zweiten Nutzerposition. Insbesondere kann das Rendern der zweiten VR-Umgebung auf der zweiten Nutzerposition basieren, indem die zweite Nutzerposition als Ausgangspunkt des Renderings herangezogen wird.

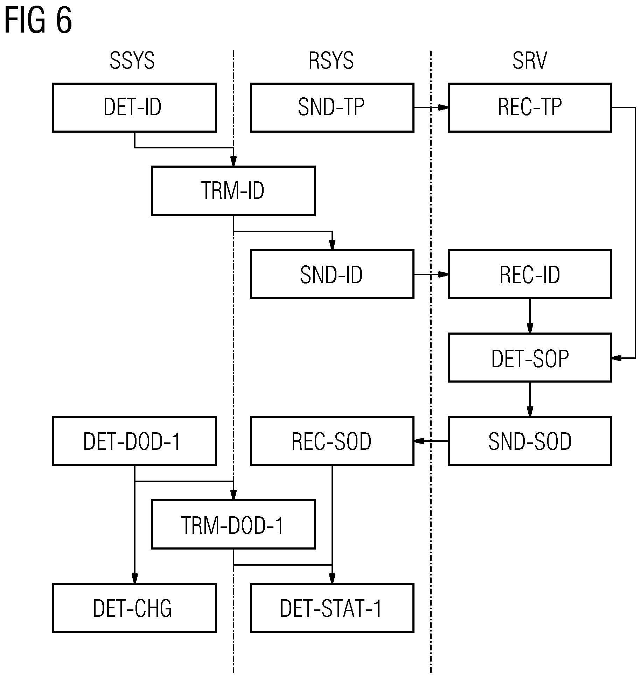

Fig. 6 zeigt ein Flussdiagramm eines vierten Ausführungsbeispiels eines Verfahrens zum Übertragen eines Zustands ST.1, ..., ST.4 von einer ersten VR-Umgebung zu einer zweiten VR-Umgebung. Das dritte Ausführungsbeispiel umfasst mehrere bzw. alle Schritte des ersten Ausführungsbeispiels und des zweiten Ausführungsbeispiels, und kann insbesondere alle vorteilhaften Aus- und Weiterbildungen dieser Schritte aufweisen.

Das vierte Ausführungsbeispiel umfasst weiterhin ein Senden SND-TP eines technischen Parameters TP.1, TP.2 des Empfangssystems RSYS an einen Server SRV mittels des Empfangssystems RSYS, insbesondere mittels einer Schnittstelle RSYS.IF des Empfangssystems RSYS, sowie ein Empfangen REC-TP des technischen Parameters TP.1, TP.2 des Empfangssystems RSYS mittels des Servers SRC, insbesondere mittels einer Schnittstelle SRV.IF des Servers SRV. In diesem Ausführungsbeispiel beschreibt der technische Parameter TP.1, TP.2 das Darstellungsvermögen des Empfangssystems RSYS und umfasst insbesondere die Rechenleistung einer Recheneinheit RSYS.CU des Empfangssystems RSYS, insbesondere eines CPU und/oder GPU des Empfangssystems RSYS (beispielsweise die Anzahl der Gleitkommaoperationen, die durch die CPU und/oder die GPU durchgeführt werden können), und weiterhin die Speicherkapazität einer Speichereinheit RSYS.MU des Empfangssystems RSYS, insbesondere eines Arbeitsspeicher des Empfangssystems RSYS.

Das vierte Ausführungsbeispiel umfasst weiterhin ein Bestimmen DET-ID eines Bezeichners eines Objektes OBJ.1, ..., OBJ.3 mittels des Sendesystems SSYS, insbesondere eines Objektes OBJ.1, ..., OBJ.3 in der ersten VR-Umgebung, ein Übermitteln TRM-ID des Bezeichners des Objekts OBJ.1, ..., OBJ.3 vom Sendesystem SSYS an das Empfangssystem RSYS, ein Senden SND-ID des Bezeichners des Objekts an einen Server SRV OBJ.1, ..., OBJ.3 mittels des Empfangssystems RSYS, und ein Empfangen REC-ID des Bezeichners des Objekts OBJ.1, ..., OBJ.3 mittels des Servers SRV. Das Bestimmen DET-ID des Bezeichners wird insbesondere mittels einer Recheneinheit SSYS.CU des Sendesystems SSYS ausgeführt. Das Übermitteln TRM-ID des Bezeichners, das Senden SND-ID des Bezeichners sowie des Empfangen REC-ID wird insbesondere mittels Schnittstellen SSYS.IF, RSYS.IF, SRV der beteiligten Einheiten ausgeführt SSYS, RSYS, SRV.

Insbesondere können beim Bestimmen DET-ID des Bezeichners weiterhin die Bezeichner einer Menge oder aller Objekte OBJ.1, ..., OBJ.3 in der ersten VR-Umgebung bestimmt werden. Ebenso können beim Übermitteln TRM-ID des Bezeichners weiterhin die Bezeichner der Menge oder aller Objekte OBJ.1, ..., OBJ.3 in der ersten VR-Umgebung übermittelt werden. Insbesondere können beim Senden SND-ID des Bezeichners weiterhin die Bezeichner der Menge oder aller Objekte OBJ.1, ..., OBJ.3 in der ersten VR-Umgebung übermittelt werden. Insbesondere können beim Empfangen REC-ID des Bezeichners weiterhin die Bezeichner der Menge oder aller Objekte OBJ.1, ..., OBJ.3 in der ersten VR-Umgebung übermittelt werden.

Die Bezeichner der Objekte OBJ.1, ..., OBJ.3 können insbesondere Teil einer statischen Teildatenstruktur SDS sein, wobei die statische Teildatenstruktur SDS insbesondere Bestandteil einer erfindungsgemäßen Datenstruktur DS sein kann.

Das dargestellte vierte Ausführungsbeispiel umfasst weiterhin das Bestimmen DET-SOD eines statischen Objektdatensatzes SOD⁽¹⁾, ..., SOD⁽³⁾ basierend auf dem technischen Parameter TP.1, TP.2 und dem Bezeichner mittels des Servers SRV, insbesondere mittels einer Recheneinheit SRV.CU des Servers SRV. Hierbei ist der statische Objektdatensatz SOD⁽¹⁾, ..., SOD⁽³⁾ an den technischen Parameter TP.1, TP.2 des Empfangssystems RSYS angepasst ist. Insbesondere kann der Server SRV hier für jeden Bezeichner unterschiedliche statische Objektdatensätze SOD⁽¹⁾, ..., SOD⁽³⁾ (z.B. räumliche Modelle mit unterschiedlicher räumlicher Auflösung, oder Texturen mit unterschiedlicher Auflösung) und zugeordnete technische Mindestparameter speichern, insbesondere in einer Datenbank. Die technischen Mindestparameter haben hierbei die gleiche Struktur wie der übermittelte technische Parameter TP.1, TP.2, der technische Mindestparameter spezifiziert in diesem Ausführungsbeispiel also ebenfalls eine Rechenleistung und eine Speicherkapazität.

Ist ein technischer Mindestparameter einem statischen Objektdatensatz SOD⁽¹⁾, ..., SOD⁽³⁾ zugeordnet, so bezeichnet die Rechenleistung des technischen Mindestparameters eine minimale Rechenleistung, die in einem Empfangssystem RSYS für die Darstellung des zugehörigen Objektes OBJ.1, ..., OBJ.3 basierend auf dem statischen Objektdatensatz SOD⁽¹⁾, ..., SOD⁽³⁾ notwendig ist. Weiterhin bezeichnet die Speicherkapazität des technischen Mindestparameters eine minimale Speicherkapazität, die in einem Empfangssystem RSYS für die Darstellung des zugehörigen Objektes OBJ.1, ..., OBJ.3 basierend auf dem statischen Objektdatensatz SOD⁽¹⁾, ..., SOD⁽³⁾ notwendig ist. Der technische Mindestparameter kann insbesondere auch die verwendete Graphik-Engine (eine deutsche Übersetzung ist "Graphik-Maschine" oder "Graphikmodul) umfassend. Beispiele für solche Graphik-Engines sind "Unity" oder "Unreal".

In diesem Ausführungsbeispiel wird beim Schritt des Bestimmens DET-SOD des statischen Objektdatensatzes SOD⁽¹⁾, ..., SOD⁽³⁾ dann einer der im Server SRV gespeicherten statischen Objektdatensätze SOD⁽¹⁾, ..., SOD⁽³⁾ ausgewählt, so dass der empfangene technische Parameter TP.1, TP.2 den dem einen der im Server SRV gespeicherten statischen Objektdatensätze SOD⁽¹⁾, ..., SOD⁽³⁾ zugeordneten technischen Mindestparameter erfüllt. Hierfür müssen in diesem Ausführungsbeispiel jeweils die Rechenleistung und die Speicherkapazität im technischen Parameter TP.1, TP.2 größer sein als die Rechenleistung und die Speicherkapazität im technischen Mindestparameter.

Der Vergleich des technischen Parameters TP.1, TP.2 und des technischen Mindestparameters, und damit auch das Bestimmen DET-SOD des statischen Objektdatensatzes SOD⁽¹⁾, ..., SOD⁽³⁾ können natürlich auch mit jeder anderen Struktur von technischen Parametern TP.1, TP.2 bzw. technischen Mindestparametern durchgeführt werden.

Insbesondere wenn mehrere Bezeichner ID von mehreren Objekten OBJ.1, ..., OBJ.3 vom Server SRV empfangen werden, können beim Bestimmen des statischen Objektdatensatzes SOD⁽¹⁾, ..., SOD⁽³⁾ alle technischen Mindestparameter berücksichtigt werden, die relevanten statischen Objektdatensätzen SOD⁽¹⁾, ..., SOD⁽³⁾ zugeordnet sind. Beispielsweise können dann die statischen Objektdatensätze SOD⁽¹⁾, ..., SOD⁽³⁾ so bestimmt werden, dass der technische Parameter TP.1, TP.2 die Summe der jeweiligen technischen Mindestparameter erfüllt. Anstelle der Summe können auch andere Funktionen der jeweiligen technischen Mindestparameter gewählt werden (z.B. der Mittelwert), insbesondere auch unterschiedliche Funktionen für unterschiedliche Bestandteile der technischen Mindestparameter.

In dem dargestellten Ausführungsbeispiel wird das Empfangen REC-SOD des statischen Objektdatensatzes SOD⁽¹⁾, ..., SOD⁽³⁾ als Reaktion auf Senden SND-ID des Bezeichners ID des Objekts OBJ.1, ..., OBJ.3 ausgeführt. In anderen Worten sendet des Empfangssystem RSYS zunächst den Bezeichner ID des Objektes OBJ.1, ..., OBJ.3 an den Server SRV, und im Anschluss empfängt REC-SOD das Empfangssystem RSYS den statischen Objektdatensatz SOD⁽¹⁾, ..., SOD⁽³⁾. Zwischen dem Senden SND-ID des Bezeichners ID des Objektes OBJ.1, ..., OBJ.3 und dem Empfangen REC-SOD des statischen Objektdatensatzes SOD⁽¹⁾, ..., SOD⁽³⁾ kann natürlich der Server SRV weitere Schritte durchführen, wie in diesem Ausführungsbeispiel dargestellt ist.

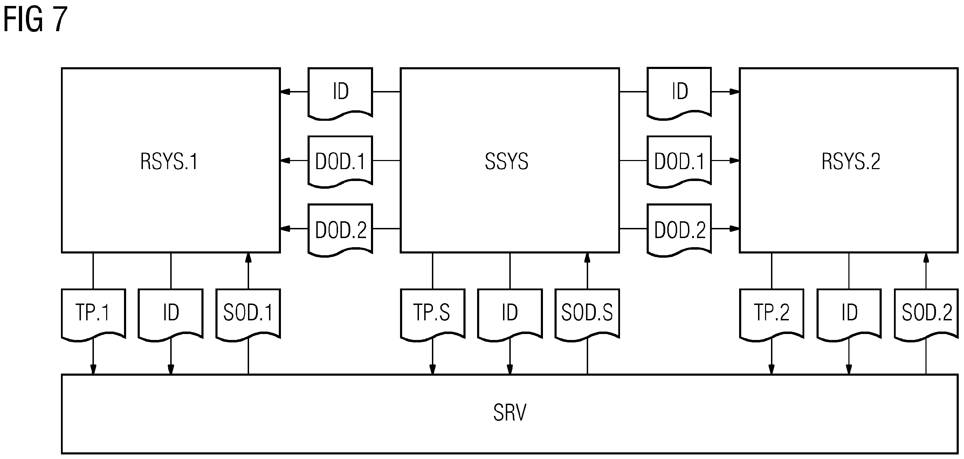

Fig. 7 zeigt ein Datenflussdiagramm des in Fig. 6 dargestellten Ausführungsbeispiels des Verfahrens. In diesem Datenflussdiagramm erfolgt eine Datenübertragung zwischen dem Sendesystem SSYS, zwei Empfangssystemen RSYS.1, RSYS.2 und einem Server SRV. Die übertragenen Daten sind zwischen dem Sendesystem SSYS und den Empfangssystemen RSYS.1, RSYS.2 in der Reihenfolge der Übertragung von oben nach unten abgebildet, und zwischen dem Sendesystem SSYS bzw. den Empfangssystemen RSYS.1, RSYS.2 und dem Server SRV in der Reihenfolge der Übertragung von links nach rechts.

Die Empfangssysteme RSYS.1, RSYS.2 senden SND-TP in diesem Datenflussdiagramm einen technischen Parameter TP.1, TP.2 des jeweiligen Empfangssystems RSYS.1, RSYS.2 an den Server SRV. Optional sendet auch das Sendesystem SSYS einen technischen Parameter TP.S des Sendesystem SSYS an den Server SRV. Weiterhin übermittelt TRM-ID das Sendesystem SSYS in diesem Datenflussdiagramm den Bezeichner ID eines oder mehrerer Objekte OBJ.1, ..., OBJ.3 an die verschiedenen Empfangssysteme RSYS.1, RSYS.2. Diese senden SND-ID diesen Bezeichner ID an den Server SRV. Auch das Sendesystem SSYS sendet in diesem Ausführungsbeispiel optional einen Bezeichner ID eines oder mehrerer Objekte OBJ.1, ..., OBJ.3 an den Server SRV.

Als Reaktion auf das Empfangen REC-ID des Bezeichners ID sendet SND-SOD der Server SRV einen an den jeweiligen technischen Parameter TP.1, TP.2, TP.S angepassten statischen Objektdatensatz SOD.1, SOD.2, SOD.S an das jeweilige Empfangssystem RSYS.1, RSYS.2 bzw. an das Sendesystem SSYS. Die Empfangssysteme RSYS.1, RSYS.2 bzw. das Sendesystem SSYS nutzen die statischen Objektdatensätze SOD.1, SOD.2, SOD.S zur Darstellung des Objektes OBJ.1, ..., OBJ.3 in der jeweiligen VR-Umgebung.

Wenn die jeweiligen statischen Objektdatensätze SOD.1, SOD.2 bei den Empfangssystemen RSYS.1, RSYS.2 vorliegen, erfolgt ein Übermitteln von dynamischen Objektdatensätzen DOD.1, DOD.2 von dem Sendesystem SSYS an die Empfangssysteme RSYS.1, RSYS.2. Die Empfangssysteme RSYS.1, RSYS.2 (und auch das Sendesystem SSYS) können dann basierend auf den jeweiligen statischen Objektdatensätze SOD.1, SOD.2, SOD.S und den jeweiligen dynamischen Objektdatensätze DOD.1, DOD.2 die jeweilige VR-Umgebung darstellen.

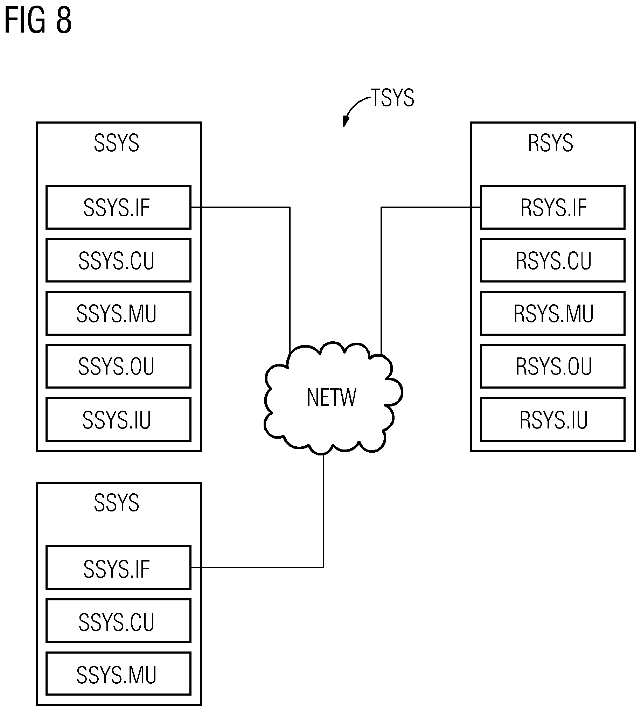

Fig. 8 zeigt ein Blockdiagramm eines Übertragungssystems TSYS umfassend ein Sendesystem SSYS, ein Empfangssystems RSYS und einen optionalen Servers SRV. Das Sendesystem SSYS umfasst eine Schnittstelle SSYS.IF, eine Recheneinheit SSYS.CU, eine Speichereinheit SSYS.MU, eine Eingabeeinheit SSYS.IU und eine Ausgabeeinheit SSYS.OU. Das Empfangssystem RSYS umfasst eine Schnittstelle RSYS.IF, eine Recheneinheit RSYS.CU, eine Speichereinheit RSYS.MU, eine Eingabeeinheit RSYS.IU und eine Ausgabeeinheit RSYS.OU. Der Server SRV umfasst eine Schnittstelle SRV.IF, eine Recheneinheit SRV.CU und eine Speichereinheit SRV.MU.

Bei dem Sendesystem SSYS und/oder dem Empfangssystem RSYS kann es sich insbesondere um einen Computer, insbesondere um eine Videobrille handeln. Ein englischer Fachbegriff für Videobrille ist "head-mountable display" bzw. "head-mounted display". Bei dem Server SRV kann es sich insbesondere um einen Computer, einen Mikrocontroller oder um einen integrierten Schaltkreis handeln. Alternativ kann es sich bei der dem Server SRV um einen realen oder virtuellen Verbund von Computern handeln (ein englischer Fachbegriff für einen realen Verbund ist "Cluster", ein englischer Fachbegriff für einen virtuellen Verbund ist "Cloud").

Bei einer Schnittstelle SSYS.IF, RSYS.IF, SRV.IF kann es sich um eine Hardware- oder Softwareschnittstelle handeln (beispielsweise PCI-Bus, USB oder Firewire). Eine Schnittstelle SSYS.IF, RSYS.IF, SRV.IF kann insbesondere eine Mehrzahl von weiteren Schnittstellen bzw. Teilschnittstellen umfassen. Eine Recheneinheit SSYS.CU, RSYS.CU, SRV.CU kann Hardware-Element oder Software-Elemente aufweisen, beispielsweise einen Mikroprozessor oder ein sogenanntes FPGA (englisches Akronym für "Field Programmable Gate Array"). Eine Recheneinheit SSYS.CU, RSYS.CU, SRV.CU kann insbesondere eine Mehrzahl von weiteren Recheneinheiten bzw. Teilrecheneinheiten umfassen. Eine Speichereinheit SSYS.MU, RSYS.MU, SRV.MU kann als nicht dauerhafte Arbeitsspeicher (Random Access Memory, kurz RAM) oder als dauerhafter Massenspeicher (Festplatte, USB-Stick, SD-Karte, Solid State Disk) realisiert sein. Eine Speichereinheit SSYS.MU, RSYS.MU, SRV.MU kann insbesondere eine Mehrzahl von weiteren Speichereinheiten bzw. Teilspeichereinheiten umfassen.

Bei einer Eingabeeinheit SSYS.IO, RSYS.IO kann es sich insbesondere um eine Einheit handeln, die eine Interaktion eines Nutzers mit einer VR-Umgebung ermöglicht. Die Eingabeeinheit SSYS.IO, RSYS.IO kann dabei am Nutzer angebracht sein, vom Nutzer bedient werden und/oder den Nutzer beobachten. Der Nutzer kann mit der Eingabeeinheit SSYS.IO, RSYS.IO insbesondere mittels Sprachsteuerung oder Gestensteuerung interagieren. Die Eingabeeinheit SSYS.IO, RSYS.IO kann weiterhin alternativ oder zusätzlich die Bewegungen des Nutzers detektieren (ein englischer Fachbegriff ist "motion tracking"), beispielsweise mittels einer optischen Kamera, insbesondere die Bewegungen einer Hand oder eines Fingers des Nutzers (ein englischer Fachbegriff ist "finger tracking" bzw. "hand tracking"), oder auch die Augenbewegungen des Nutzers (ein englischer Fachbegriff ist "eye tracking"). Die optische Kamera kann dabei am Nutzer selbst befestigt sein (ein englischer Fachbegriff ist 'inside-out tracking"), oder den Nutzer von außerhalb beobachten (ein englischer Fachbegriff ist "outside-in tracking"). Die Bewegungsdetektion kann durch die Verwendung von Markern am Nutzer verbessert werden. Neben optischen Detektoren ist alternativ oder zusätzlich auch die Verwendung von akustischen Detektoren (z.B. Ultraschall), elektromagnetischen Detektoren (z.B. stromdurchflossene Spulen), Intertialdetektoren (z.B. Gyroskopen, Accelerometern oder Magnetometern), oder Goniometern möglich. Die Eingabeeinheit SSYS.IO, RSYS.IO kann weiterhin auch physische Bedienelemente umfassen, beispielsweise eine Maus, eine Tastatur oder einen Joystick.

Bei einer Ausgabeeinheit SSYS.OU, RSYS.OU kann es sich insbesondere um eine Einheit handeln, die eine Darstellung einer VR-Umgebung ermöglicht. Die Ausgabeeinheit SSYS.OU, RSYS.OU kann hierbei insbesondere Bestandteil einer Videobrille (ein englischer Fachbegriff ist "head-mountable display") ausgebildet sein. Bekannte Techniken hierfür sind "See-Through-Displays" (eine deutsche Übersetzung sind "Durchschaubildschirme", hierbei werden mittels Strahlteiler Realität und virtuelles Bild überlagert) oder Bildschirme, die direkt oder über eine Projektion ("head-mounted non-projective displays" bzw. "head-mounted projective displays") vom menschlichen Auge wahrgenommen werden können. Alternativ zur Videobrille kann die Ausgabeeinheit auch Teil eines Projektionssystems (beispielsweise "Cave Automatic Virtual Environment", ein Akronym ist CAVE, eine deutsche Übersetzung ist "Höhle mit automatisierter, virtueller Umwelt") sein. Die jeweiligen Bildschirme können als OLED-Bildschirme (Akronym für "organic light emitting diode", eine deutsche Übersetzung ist "organische Leuchtdiode"), LCD-Bildschirme (Akronym für "liquid cristall display", eine deutsche Übersetzung ist "Flüssigkristalldisplay") oder CLPL-Bildschirme (Akronym für "customized low persistence liquid", eine deutsche Übersetzung ist "angepasste Flüssigkeit mit niedriger Persistenz").

Das Sendesystem SSYS, das Empfangssystem RSYS sowie der Server SRV sind über ein Netzwerk NETW verbunden, insbesondere mittels der jeweiligen Schnittstellen SSYS.IF, RSYS.IF, SRV.IF. Beim Netzwerk NETW kann es sich um ein lokales Netzwerk (ein englischer Fachbegriff ist "Local Area Network", kurz "LAN") oder um ein großräumiges Netzwerk (ein englischer Fachbegriff ist "Wide Area Network", kurz "WAN") handeln. Ein Beispiel für ein lokales Netzwerk ist ein Intranet, ein Beispiel für ein großräumiges Netzwerk ist das Internet. Das Netzwerk NETW kann insbesondere auch drahtlos ausgeführt sein, insbesondere als WLAN (für "wireless LAN", im englischen ist die Abkürzung "WiFi" gebräuchlich) oder als Bluetooth-Verbindung. Das Netzwerk NETW kann auch als Kombination der genannten Beispiele ausgeführt sein.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

## Patentansprüche

1. Computerimplementiertes Verfahren zum Übertragen eines Zustands (ST.1, ..., ST.4) von einer ersten VR-Umgebung zu einer zweiten VR-Umgebung, umfassend:
- Empfangen (REC-SOD) eines statischen Objektdatensatzes (SOD⁽¹⁾, ..., SOD⁽³⁾, SOD.1, SOD.2) bezüglich eines Objektes (OBJ.1.1, OBJ.1.2, OBJ.1.3, OBJ.1.4, OBJ.2.1, OBJ.2.2, OBJ.2.3, OBJ.2.4, OBJ.3.1, OBJ.3.2, OBJ.3.3, OBJ.3.4) mittels eines Empfangssystems (RSYS, RSYS.1, RSYS.2),
wobei das Objekt (OBJ.1.1, ..., OBJ.3.4) in einer durch ein Sendesystem (SSYS) generierten ersten VR-Umgebung und in der durch das Empfangssystem (RSYS, RSYS.1, RSYS.2) generierten zweiten VR-Umgebung darstellbar ist,
- Bestimmen (DET-DOD-1) eines ersten dynamischen Objektdatensatzes (DOD⁽¹⁾(FID.1), ..., DOD⁽³⁾(FID.3), DOD.1, DOD. 2) bezüglich des Objektes (OBJ.1.1, ..., OBJ.3.4) mittels des Sendesystems (SSYS),
wobei der erste dynamische Objektdatensatz (DOD⁽¹⁾(FID.1), ..., DOD⁽³⁾(FID.3), DOD.1, DOD.2) eine dynamische Eigenschaft (DP⁽¹⁾₁(FID.1), ..., DP⁽³⁾₁(FID.3)) des Objektes (OBJ.1, ..., OBJ.3) in der ersten VR-Umgebung betrifft,
- Übermitteln (TRM-DOD-1) des ersten dynamischen Objektdatensatzes (DOD⁽¹⁾(FID.1), ..., DOD⁽³⁾(FID.3), DOD.1, DOD. 2) vom Sendesystem (SSYS) zum Empfangssystem (RSYS, RSYS.1, RSYS.2), - Bestimmen (DET-STAT-1) eines ersten Zustands (ST.1, ..., ST.4) der zweiten VR-Umgebung basierend auf dem statischen Objektdatensatz (SOD⁽¹⁾, ..., SOD⁽³⁾, SOD.1, SOD.2) und dem ersten dynamischen Objektdatensatz (DOD⁽¹⁾(FID.1), ..., DOD⁽³⁾(FID.3), DOD.1, DOD.2) mittels des Empfangssystems (RSYS, RSYS.1, RSYS.2),
- Bestimmen (DET-UPOS-1) einer ersten virtuellen Nutzerposition eines Nutzers in der ersten VR-Umgebung mittels des Sendesystems (SSYS),
- Übermitteln (TRM-UPOS-1) der ersten virtuellen Nutzerposition vom Sendesystem (SSYS) zum Empfangssystem (RSYS, RSYS.1, RSYS.2),
- Bestimmen (DET-UPOS-2) einer zweiten virtuellen Nutzerposition eines Nutzers in der zweiten VR-Umgebung basierend auf der ersten Nutzerposition,
wobei die zweite virtuelle Nutzerposition die zur ersten virtuellen Nutzerposition um einen konstanten Wert verschobene Nutzerposition in der zweiten VR-Umgebung ist,
wobei das Bestimmen des ersten Zustandes (ST.1, ..., ST.4) der zweiten VR-Umgebung weiterhin auf der zweiten Nutzerposition basiert.

2. Verfahren nach dem Anspruch 1, weiterhin umfassend:
- Bestimmen (DET-DOD-2) eines zweiten dynamischen Objektdatensatzes (DOD⁽¹⁾(FID.1), ..., DOD⁽³⁾(FID.3), DOD.1, DOD.2) bezüglich des Objektes (OBJ.1.1, ..., OBJ.3.4) mittels des Sendesystems (SSYS),
wobei der erste dynamische Objektdatensatz (DOD⁽¹⁾(FID.1), ..., DOD⁽³⁾(FID.3), DOD.1, DOD.2) die dynamische Eigenschaft (DP⁽¹⁾₁(FID.1), ..., DP⁽³⁾₁(FID.3)) des Objektes (OBJ.1.1, ..., OBJ.3.4) zu einem ersten Zeitpunkt in der ersten VR-Umgebung betrifft,
wobei der zweite dynamische Objektdatensatz (DOD⁽¹⁾(FID.1), ..., DOD⁽³⁾(FID.3), DOD.1, DOD.2) die dynamische Eigenschaft (DP⁽¹⁾₁(FID.1), ..., DP⁽³⁾₁(FID.3)) des Objektes (OBJ.1.1, ..., OBJ.3.4) zu einem zweiten Zeitpunkt in der ersten VR-Umgebung betrifft,
- Übermitteln (TRM-DOD-2) des zweiten dynamischen Objektdatensatzes (DOD⁽¹⁾(FID.1), ..., DOD⁽³⁾(FID.3), DOD.1, DOD.2) vom Sendesystem (SSYS) zum Empfangssystem (RSYS, RSYS.1, RSYS.2),
- Bestimmen (DET-STAT-2) eines zweiten Zustands (ST.1, ..., ST.4) der zweiten VR-Umgebung basierend auf dem statischen Objektdatensatz (SOD⁽¹⁾, ..., SOD⁽³⁾, SOD.1, SOD.2) und dem zweiten dynamischen Objektdatensatz (DOD⁽¹⁾(FID.1), ..., DOD⁽³⁾(FID.3), DOD.1, DOD.2) mittels des Empfangssystems (RSYS, RSYS.1, RSYS.2).

3. Verfahren nach dem Anspruch 2, weiterhin umfassend:
- Feststellen (DET-CHG) einer Änderung der dynamischen Eigenschaft (DP⁽¹⁾₁(FID.1), ..., DP⁽³⁾₁(FID.3)) des Objektes (OBJ.1.1, ..., OBJ.3.4), wobei das Bestimmen des zweiten dynamischen Objektdatensatzes (DOD⁽¹⁾(FID.1), ..., DOD⁽³⁾(FID.3), DOD.1, DOD.2) als Reaktion auf das Feststellen der Änderung der dynamischen Eigenschaft (DP⁽¹⁾₁(FID.1), ..., DP⁽³⁾₁(FID.3)) des Objektes (OBJ.1.1, ..., OBJ.3.4) erfolgt.

4. Verfahren nach einem der vorstehenden Ansprüche, wobei die dynamische Eigenschaft (DP⁽¹⁾₁(FID.1), ..., DP⁽³⁾₁(FID.3)) des Objektes (OBJ.1.1, ..., OBJ.3.4) durch eine Interaktion eines Nutzers mit der ersten VR-Umgebung änderbar ist.

5. Verfahren nach dem Anspruch 4, wobei die dynamische Eigenschaft (DP⁽¹⁾₁(FID.1), ..., DP⁽³⁾₁(FID.3)) des Objektes (OBJ.1.1, ..., OBJ.3.4) mindestens eine der folgenden Eigenschaften des Objektes (OBJ.1.1, ..., OBJ.3.4) betrifft:
- Position und/oder Orientierung des Objektes (OBJ.1.1, ..., OBJ.3.4),
- Sichtbarkeit des Objektes (OBJ.1.1, ..., OBJ.3.4),
- Verknüpfung des Objektes mit einem weiteren Objekt (OBJ.1.1, ..., OBJ.3.4),
- Lichtparameter des Objektes (OBJ.1.1, ..., OBJ.3.4).

6. Verfahren nach einem der vorstehenden Ansprüche, wobei der statische Objektdatensatz (SOD⁽¹⁾, ..., SOD⁽³⁾, SOD.1, SOD.2) mindestens eine statische Eigenschaft (SP⁽¹⁾₁, ..., SP⁽³⁾₁) des Objektes (OBJ.1.1, ..., OBJ.3.4) betrifft, wobei die statische Eigenschaft (SP⁽¹⁾₁, ..., SP⁽³⁾₁) des Objektes (OBJ.1.1, ..., OBJ.3.4) nicht durch eine Interaktion eines Nutzers mit der ersten VR-Umgebung änderbar ist.

7. Verfahren nach dem Anspruch 6, wobei die statische Eigenschaft (SP⁽¹⁾₁, ..., SP⁽³⁾₁) mindestens eine der folgenden Eigenschaften des Objektes (OBJ.1.1, ..., OBJ.3.4) betrifft:
- räumliches Modell des Objektes, (OBJ.1.1, ..., OBJ.3.4)
- eine oder mehrere Texturen des Objektes (OBJ.1.1, ..., OBJ.3.4),
- konstante physikalische Eigenschaft des Objektes (OBJ.1.1, ..., OBJ.3.4) .

8. Verfahren nach einem der vorstehenden Ansprüche, wobei das Bestimmen des ersten Zustandes (ST.1, ..., ST.4) und/oder das Bestimmen des zweiten Zustandes (ST.1, ..., ST.4) ein Rendern des Objektes (OBJ.1.1, ..., OBJ.3.4) umfasst.

9. Verfahren nach einem der vorstehenden Ansprüche, weiterhin umfassend:
- Senden (SND-TP) eines technischen Parameters (TP.1, TP.2) des Empfangssystems (RSYS, RSYS.1, RSYS.2) an einen Server (SRV) mittels des Empfangssystems (RSYS, RSYS.1, RSYS.2), wobei der statische Objektdatensatz (SOD⁽¹⁾, ..., SOD⁽³⁾, SOD.1, SOD.2) an den technischen Parameter (TP.1, TP.2) des Empfangssystems (RSYS, RSYS.1, RSYS.2) angepasst ist.

10. Verfahren nach einem der vorstehenden Ansprüche, weiterhin umfassend:
- Bestimmen (DET-ID) eines Bezeichners eines Objektes (OBJ.1.1, ..., OBJ.3.4) mittels des Sendesystems (SSYS),
- Übermitteln (TRM-ID) des Bezeichners des Objekts (OBJ.1.1, ..., OBJ.3.4) vom Sendesystem (SSYS) an das Empfangssystem (RSYS, RSYS.1, RSYS.2),
- Senden (SND-ID) des Bezeichners des Objekts (OBJ.1.1, ..., OBJ.3.4) an einen Server (SRV) mittels des Empfangssystems (RSYS, RSYS.1, RSYS.2),
wobei das Empfangen des statischen Objektdatensatzes (SOD⁽¹⁾, ..., SOD⁽³⁾, SOD.1, SOD.2) als Reaktion auf Senden des Bezeichners des Objekts (OBJ.1.1, ..., OBJ.3.4) ausgeführt wird.

11. Übertragungssystem (TSYS) zum Übertragen eines Zustandes (ST.1, ..., ST.4) von einer erste VR-Umgebung zu einer zweiten VR-Umgebung, umfassend:
- Sendesystem (SSYS), ausgebildet zum Bestimmen (DET-DOD-1) eines ersten dynamischen Objektdatensatzes (DOD⁽¹⁾(FID.1), ..., DOD⁽³⁾(FID.3), DOD.1, DOD.2) bezüglich eines Objektes (OBJ.1, ..., OBJ. 3), wobei das Objekt (OBJ.1.1, ..., OBJ.3.4) in der durch das Sendesystem (SSYS) generierten ersten VR-Umgebung darstellbar ist, wobei der erste dynamische Objektdatensatz (DOD⁽¹⁾(FID.1), ..., DOD⁽³⁾(FID.3), DOD.1, DOD.2) eine dynamische Eigenschaft (DP⁽¹⁾₁(FID.1), ..., DP⁽³⁾₁(FID.3)) des Objektes (OBJ.1.1, ..., OBJ.3.4) in der ersten VR-Umgebung betrifft, weiterhin ausgebildet zum Bestimmen (DET-UPOS-1) einer ersten virtuellen Nutzerposition eines Nutzers in der ersten VR-Umgebung mittels des Sendesystems (SSYS),
- Empfangssystem (RSYS, RSYS.1, RSYS.2), ausgebildet zum Empfangen (REC-SOD) eines statischen Objektdatensatzes (SOD⁽¹⁾, ..., SOD⁽³⁾, SOD.1, SOD.2) bezüglich des Objektes (OBJ.1.1, ..., OBJ.3.4), wobei das Objekt (OBJ.1.1, ..., OBJ.3.4) in der durch das Empfangssystem (RSYS, RSYS.1, RSYS.2) generierten zweiten VR-Umgebung darstellbar ist,
weiterhin ausgebildet zum Bestimmen (DET-STAT-1) eines ersten Zustands (ST.1, ..., ST.4) der zweiten VR-Umgebung basierend auf dem statischen Objektdatensatz (SOD⁽¹⁾, ..., SOD⁽³⁾, SOD.1, SOD.2) und dem ersten dynamischen Objektdatensatz (DOD⁽¹⁾(FID.1), ..., DOD⁽³⁾(FID.3), DOD.1, DOD.2),
weiterhin ausgebildet zum Bestimmen (DET-UPOS-2) einer zweiten virtuellen Nutzerposition eines Nutzers in der zweiten VR-Umgebung basierend auf der ersten Nutzerposition,
wobei das Bestimmen des ersten Zustandes (ST.1, ..., ST.4) der zweiten VR-Umgebung weiterhin auf der zweiten Nutzerposition basiert,
wobei die zweite virtuelle Nutzerposition die zur ersten virtuellen Nutzerposition um einen konstanten Wert verschobene Nutzerposition in der zweiten VR-Umgebung ist;
wobei das Übertragungssystem (TSYS) weiterhin zum Übermitteln (TRM-DOD-1) des ersten dynamischen Objektdatensatzes (DOD⁽¹⁾(FID.1), ..., DOD⁽³⁾(FID.3), DOD.1, DOD.2) vom Sendesystem (SSYS) zum Empfangssystem (RSYS, RSYS.1, RSYS.2) ausgebildet ist,
wobei das Übertragungssystem (TSYS) weiterhin zum Übermitteln (TRM-UPOS-1) der ersten virtuellen Nutzerposition vom Sendesystem (SSYS) zum Empfangssystem (RSYS, RSYS.1, RSYS.2) ausgebildet ist.

12. Computerprogrammprodukt mit einem Computerprogramm, welches direkt in einen Speicher eines Übertragungssystems (TSYS) ladbar ist, mit Programmabschnitten, um alle Schritte des Verfahrens nach einem der Ansprüche 1 bis 10 auszuführen, wenn die Programmabschnitte von dem Übertragungssystem (TSYS) ausgeführt werden.

13. Computerlesbares Speichermedium, auf welchem von einem Übertragungssystem (TSYS) lesbare und ausführbare Programmabschnitte gespeichert sind, um alle Schritte des Verfahrens nach einem der Ansprüche 1 bis 10 auszuführen, wenn die Programmabschnitte von dem Übertragungssystem (TSYS) ausgeführt werden.

14. Computerimplementierte Datenstruktur (DS) zur Anwendung in einem Verfahren nach einem der Ansprüche 1 bis 10 oder in einem Übertragungssystem nach dem Anspruch 11, umfassend eine statische Teildatenstruktur (SDS) und eine dynamischen Teildatenstruktur (DDS.1, ..., DDS.3),
wobei die statische Teildatenstruktur (SDS) statische Objektdatensätze (SOD⁽¹⁾, ..., SOD⁽³⁾, SOD.1, SOD.2) bezüglich Objekten (OBJ.1, ..., OBJ.3) umfasst,
wobei die dynamische Teildatenstruktur (DDS.1, ..., DDS.3) dynamische Objektdatensätze (DOD⁽¹⁾(FID.1), ..., DOD⁽³⁾(FID. 3), DOD.1, DOD.2) bezüglich der Objekte (OBJ.1.1, ..., OBJ.3.4) umfasst,
und wobei der Zustand (ST.1, ..., ST.4) einer VR-Umgebung basierend auf den statischen Objektdatensätzen (SOD⁽¹⁾, ..., SOD⁽³⁾, SOD.1, SOD.2) und den dynamischen Objektdatensätzen (DOD⁽¹⁾(FID.1), ..., DOD⁽³⁾(FID.3), DOD.1, DOD. 2) darstellbar ist.

15. Computerimplementiertes Verfahren zum Bestimmen eines Zustands (ST.1, ..., ST.4) eines Objektes (OBJ.1.1, ..., OBJ.3.4) in einer zweiten VR-Umgebung, umfassend:
- Empfangen eines statischen Objektdatensatzes (SOD⁽¹⁾, ..., SOD⁽³⁾, SOD.1, SOD.2) bezüglich des Objektes (OBJ.1.1, ..., OBJ.3.4) mittels eines Empfangssystems (RSYS, RSYS.1, RSYS.2),
wobei das Objekt in der mittels des Empfangssystems (RSYS, RSYS.1, RSYS.2) generierbaren zweiten VR-Umgebung darstellbar ist,
- Empfangen eines ersten dynamischen Objektdatensatzes (DOD⁽¹⁾(FID.1), ..., DOD⁽³⁾(FID.3), DOD.1, DOD. 2) bezüglich des Objektes (OBJ.1.1, ..., OBJ.3.4) mittels des Empfangssystems (RSYS, RSYS.1, RSYS.2),
wobei der erste dynamische Objektdatensatz (DOD⁽¹⁾(FID.1), ..., DOD⁽³⁾(FID.3), DOD.1, DOD.2) eine dynamische Eigenschaft (DP⁽¹⁾₁(FID.1), ..., DP⁽³⁾₁(FID.3)) des Objektes (OBJ.1.1, ..., OBJ.3.4) in einer ersten VR-Umgebung betrifft,
- Bestimmen eines ersten Zustandes (ST.1, ..., ST.4) des Objektes (OBJ.1.1, ..., OBJ.3.4) in der zweiten VR-Umgebung basierend auf dem statischen Objektdatensatz (SOD⁽¹⁾, ..., SOD⁽³⁾, SOD.1, SOD.2) und dem ersten dynamischen Objektdatensatz (DOD⁽¹⁾(FID.1), ..., DOD⁽³⁾(FID.3), DOD.1, DOD. 2) mittels des Empfangssystems (RSYS, RSYS.1, RSYS.2),
- Bestimmen einer ersten virtuellen Nutzerposition eines Nutzers in der ersten VR-Umgebung mittels des Sendesystems (SSYS),
- Bestimmen einer zweiten virtuellen Nutzerposition eines Nutzers in der zweiten VR-Umgebung basierend auf der ersten Nutzerposition,
wobei die zweite virtuelle Nutzerposition die zur ersten virtuellen Nutzerposition um einen konstanten Wert verschobene Nutzerposition in der zweiten VR-Umgebung ist,
wobei das Bestimmen des ersten Zustandes (ST.1, ..., ST.4) der zweiten VR-Umgebung weiterhin auf der zweiten Nutzerposition basiert.

## Claims

1. Computer-implemented method for transferring a state (ST.1, ..., ST.4) from a first VR environment to a second VR environment, comprising:
- receiving (REC-SOD), by means of a receiving system (RSYS, RSYS.1, RSYS.2), a static object dataset (SOD⁽¹⁾, ..., SOD⁽³⁾, SOD.1, SOD.2) relating to an object (OBJ.1.1, OBJ.1.2, OBJ.1.3, OBJ.1.4, OBJ.2.1, OBJ.2.2, OBJ.2.3, OBJ.2.4, OBJ.3.1, OBJ.3.2, OBJ.3.3, OBJ.3.4),
wherein the object (OBJ.1.1, ..., OBJ.3.4) can be represented in a first VR environment, which is generated by a sending system (SSYS), and in the second VR environment, which is generated by the receiving system (RSYS, RSYS.1, RSYS.2),
- determining (DET-DOD-1), by means of the sending system (SSYS), a first dynamic object dataset (DOD (1) (FID.1), ..., DOD⁽³⁾(FID.3), DOD.1, DOD.2) relating to the object (OBJ.1.1, ..., OBJ.3.4),
wherein the first dynamic object dataset (DOD⁽¹⁾(FID.1), ..., DOD⁽³⁾(FID.3), DOD.1, DOD.2) relates to a dynamic property (DP⁽¹⁾₁(FID.1), ..., DP⁽³⁾₁(FID.3)) of the object (OBJ.1, ..., OBJ.3) in the first VR environment,
- transmitting (TRM-DOD-1) the first dynamic object dataset (DOD⁽¹⁾(FID.1), ..., DOD⁽³⁾(FID.3), DOD.1, DOD.2) from the sending system (SSYS) to the receiving system (RSYS, RSYS.1, RSYS.2),
- determining (DET-STAT-1), by means of the receiving system (RSYS, RSYS.1, RSYS.2), a first state (ST.1, ..., ST.4) of the second VR environment on the basis of the static object dataset (SOD⁽¹⁾, ..., SOD⁽³⁾, SOD.1, SOD.2) and the first dynamic object dataset (DOD⁽¹⁾(FID.1), ..., DOD⁽³⁾(FID.3), DOD.1, DOD.2)
- determining (DET-UPOS-1), by means of the sending system (SSYS), a first virtual user-position of a user in the first VR environment,
- transmitting (TRM-UPOS-1) the first virtual user-position from the sending system (SSYS) to the receiving system (RSYS, RSYS.1, RSYS.2),
- determining (DET-UPOS-2) a second virtual user-position of a user in the second VR environment based on the first user-position,
wherein the second virtual user-position is the user-position in the second VR environment that is offset from the first virtual user-position by a constant value,
wherein determining the first state (ST.1, ..., ST.4) of the second VR environment is additionally based on the second user-position.

2. Method according to claim 1, further comprising:
- determining (DET-DOD-2), by means of the sending system (SSYS), a second dynamic object dataset (DOD⁽¹⁾(FID.1), ..., DOD⁽³⁾(FID.3), DOD.1, DOD.2) relating to the object (OBJ.1.1, ..., OBJ.3.4),
wherein the first dynamic object dataset (DOD⁽¹⁾(FID.1), ..., DOD⁽³⁾(FID.3), DOD.1, DOD.2) relates to the dynamic property (DP⁽¹⁾₁(FID.1), ..., DP⁽³⁾₁(FID.3)) of the object (OBJ.1.1, ..., OBJ.3.4) at a first time instant in the first VR environment, wherein the second dynamic object dataset (DOD⁽¹⁾(FID.1), ..., DOD⁽³⁾(FID.3), DOD.1, DOD.2) relates to the dynamic property (DP⁽¹⁾₁(FID.1), ..., DP⁽³⁾₁FID.3)) of the object (OBJ.1.1, ..., OBJ.3.4) at a second time instant in the first VR environment,
- transmitting (TRM-DOD-2) the second dynamic object dataset (DOD⁽¹⁾(FID.1), ..., DOD⁽³⁾(FID.3), DOD.1, DOD.2) from the sending system (SSYS) to the receiving system (RSYS, RSYS.1, RSYS.2),
- determining (DET-STAT-2), by means of the receiving system (RSYS, RSYS.1, RSYS.2), a second state (ST.1, ..., ST.4) of the second VR environment on the basis of the static object dataset (SOD⁽¹⁾, ..., SOD⁽³⁾, SOD.1, SOD.2) and the second dynamic object dataset (DOD⁽¹⁾(FID.1), ..., DOD⁽³⁾(FID.3), DOD.1, DOD.2) .

3. Method according to claim 2, further comprising:
- detecting (DET-CHG) a change in the dynamic property (DP⁽¹⁾₁(FID.1), ..., DP⁽³⁾₁(FID.3)) of the object (OBJ.1.1, ..., OBJ.3.4), wherein the second dynamic object dataset (DOD⁽¹⁾(FID.1), ..., DOD⁽³⁾(FID.3), DOD.1, DOD.2) is determined in response to the detection of the change in the dynamic property (DP⁽¹⁾₁(FID.1), ..., DP⁽³⁾₁(FID. 3)) of the object (OBJ.1.1, ..., OBJ.3.4).

4. Method according to one of the preceding claims, wherein the dynamic property (DP⁽¹⁾₁(FID.1), ..., DP⁽³⁾₁(FID.3)) of the object (OBJ.1.1, ..., OBJ.3.4) can be changed by an interaction of a user with the first VR environment.

5. Method according to claim 4, wherein the dynamic property (DP⁽¹⁾₁(FID.1), ..., DP⁽³⁾₁(FID.3)) of the object (OBJ.1.1, ..., OBJ.3.4) relates to at least one of the following properties of the object (OBJ.1.1, ..., OBJ.3.4):
- position and/or orientation of the object (OBJ.1.1, ..., OBJ.3.4),
- visibility of the object (OBJ.1.1, ..., OBJ.3.4),
- link between the object and another object (OBJ.1.1, ..., OBJ.3.4),
- light parameter of the object (OBJ.1.1, ..., OBJ.3.4).

6. Method according to one of the preceding claims, wherein the static object dataset (SOD⁽¹⁾, ..., SOD⁽³⁾, SOD.1, SOD.2) relates to at least one static property (SP⁽¹⁾₁, ..., SP⁽³⁾₁) of the object (OBJ.1.1, ..., OBJ.3.4), wherein the static property (SP⁽¹⁾₁, ..., SP⁽³⁾₁) of the object (OBJ.1.1, ..., OBJ.3.4) cannot be changed by an interaction of a user with the first VR environment.

7. Method according to claim 6, wherein the static property (SP⁽¹⁾₁, ..., SP⁽³⁾₁) relates to at least one of the following properties of the object (OBJ.1.1, ..., OBJ.3.4):
- three-dimensional model of the object, (OBJ.1.1, ..., OBJ.3.4)
- one or more textures of the object (OBJ.1.1, ..., OBJ.3.4),
- constant physical property of the object (OBJ.1.1, ..., OBJ.3.4) .

8. Method according to one of the preceding claims, wherein determining the first state (ST.1, ..., ST.4) and/or determining the second state (ST.1, ..., ST.4) comprises rendering the object (OBJ.1.1, ..., OBJ.3.4).

9. Method according to one of the preceding claims, further comprising:
- sending (SND-TP), by means of the receiving system (RSYS, RSYS.1, RSYS.2), a technical parameter (TP.1, TP.2) of the receiving system (RSYS, RSYS.1, RSYS.2) to a server (SRV), wherein the static object dataset (SOD⁽¹⁾, ..., SOD⁽³⁾, SOD.1, SOD.2) is adapted to the technical parameter (TP.1, TP.2) of the receiving system (RSYS, RSYS.1, RSYS.2).

10. Method according to one of the preceding claims, further comprising:
- determining (DET-ID) an identifier of an object (OBJ.1.1, ..., OBJ.3.4) by means of the sending system (SSYS),
- transmitting (TRM-ID) the identifier of the object (OBJ.1.1, ..., OBJ.3.4) from the sending system (SSYS) to the receiving system (RSYS, RSYS.1, RSYS.2),
- sending (SND-ID) the identifier of the object (OBJ.1.1, ..., OBJ.3.4) to a server (SRV) by means of the receiving system (RSYS, RSYS.1, RSYS.2),
wherein receiving the static object dataset (SOD⁽¹⁾, ..., SOD⁽³⁾, SOD.1, SOD.2) is carried out in response to sending the identifier of the object (OBJ.1.1, ..., OBJ.3.4).

11. Transfer system (TSYS) for transferring a state (ST.1, ..., ST.4) from a first VR environment to a second VR environment, comprising:
- sending system (SSYS), designed to determine (DET-DOD-1) a first dynamic object dataset (DOD (1) (FID.1), ..., DOD⁽³⁾ (FID.3), DOD.1, DOD.2) relating to an object (OBJ.1, ..., OBJ.3), wherein the object (OBJ.1.1, ..., OBJ.3.4) can be represented in the first VR environment, which is generated by the sending system (SSYS), wherein the first dynamic object dataset (DOD⁽¹⁾(FID.1), ..., DOD⁽³⁾(FID.3), DOD.1, DOD.2) relates to a dynamic property (DP⁽¹⁾₁(FID.1), ..., DP⁽³⁾₁(FID.3) of the object (OBJ.1.1, ..., OBJ.3.4) in the first VR environment, additionally designed to determine (DET-UPOS-1), by means of the sending system (SSYS), a first virtual user-position of a user in the first VR environment,
- receiving system (RSYS, RSYS.1, RSYS.2), designed to receive (REC-SOD) a static object dataset (SOD⁽¹⁾, ..., SOD⁽³⁾,SOD.1, SOD.2) relating to the object (OBJ.1.1, ..., OBJ.3.4), wherein the object (OBJ.1.1, ..., OBJ.3.4) can be represented in the second VR environment, which is generated by the receiving system (RSYS, RSYS.1, RSYS.2),
additionally designed to determine (DET-STAT-1) a first state (ST.1, ..., ST.4) of the second VR environment on the basis of the static object dataset (SOD⁽¹⁾, ..., SOD⁽³⁾, SOD.1, SOD.2) and the first dynamic object dataset (DOD⁽¹⁾(FID.1), ..., DOD⁽³⁾(FID.3), DOD.1, DOD.2);
additionally designed to determine (DET-UPOS-2) a second virtual user-position of a user in the second VR environment on the basis of the first user-position,
wherein determining the first state (ST.1, ..., ST.4) of the second VR environment is additionally based on the second user-position,
wherein the second virtual user-position is the user-position in the second VR environment that is offset from the first virtual user-position by a constant value;
wherein the transfer system (TSYS) is additionally designed to transmit (TRM-DOD-1) the first dynamic object dataset (DOD⁽¹⁾(FID.1), ..., DOD⁽³⁾(FID.3), DOD.1, DOD.2) from the sending system (SSYS) to the receiving system (RSYS, RSYS.1, RSYS.2), wherein the transfer system (TSYS) is additionally designed to transmit (TRM-UPOS-1) the first virtual user-position from the sending system (SSYS) to the receiving system (RSYS, RSYS.1, RSYS.2) .

12. Computer program product comprising a computer program, which can be loaded directly into a memory of a transfer system (TSYS), and which contains program segments, in order to perform all the steps of the method according to one of claims 1 to 10 when the program segments are executed by the transfer system (TSYS).

13. Computer-readable storage medium, on which are stored program segments which can be read and executed by a transfer system (TSYS) in order to perform all the steps of the method according to one of claims 1 to 10 when the program segments are executed by the transfer system (TSYS).

14. Computer-implemented data structure (DS) for use in a method according to one of claims 1 to 10 or in a transfer system according to claim 11, comprising a static sub-data structure (SDS) and a dynamic sub-data structure (DDS.1, ..., DDS.3),
wherein the static sub-data structure (SDS) comprises static object datasets (SOD⁽¹⁾, ..., SOD⁽³⁾, SOD.1, SOD.2) relating to objects (OBJ.1, ..., OBJ.3),
wherein the dynamic sub-data structure (DDS.1, ..., DDS.3) comprises dynamic object datasets (DOD⁽¹⁾(FID.1), ..., DOD⁽³⁾(FID.3), DOD.1, DOD.2) relating to the objects (OBJ.1.1, ..., OBJ.3.4),
and wherein the state (ST.1, ..., ST.4) of a VR environment can be represented on the basis of the static object datasets (SOD⁽¹⁾, ..., SOD⁽³⁾, SOD.1, SOD.2) and the dynamic object datasets (DOD⁽¹⁾(FID.1), ..., DOD⁽³⁾(FID.3), DOD.1, DOD.2) .

15. Computer-implemented method for determining a state (ST.1, ..., ST.4) of an object (OBJ.1.1, ..., OBJ.3.4) in a second VR environment, comprising:
- receiving, by means of a receiving system (RSYS, RSYS.1, RSYS.2), a static object dataset (SOD⁽¹⁾, ..., SOD⁽³⁾, SOD.1, SOD.2) relating to the object (OBJ.1.1, ..., OBJ.3.4),
wherein the object can be represented in the second VR environment, which can be generated by a receiving system (RSYS, RSYS.1, RSYS.2),
- receiving, by means of the receiving system (RSYS, RSYS.1, RSYS.2), a first dynamic object dataset (DOD (1) (FID.1), ..., DOD⁽³⁾(FID.3), DOD.1, DOD.2) relating to the object (OBJ.1.1, ..., OBJ.3.4),
wherein the first dynamic object dataset (DOD⁽¹⁾(FID.1), ..., DOD⁽³⁾(FID.3), DOD.1, DOD.2) relates to a dynamic property DP⁽¹⁾₁(FID.1), ..., DP⁽³⁾₁FID.3) of the object (OBJ.1.1, ..., OBJ.3.4) in a first VR environment,
- determining, by means of the receiving system (RSYS, RSYS.1, RSYS.2), a first state (ST.1, ..., ST.4) of the object (OBJ.1.1, ..., OBJ.3.4) in the second VR environment on the basis of the static object dataset (SOD⁽¹⁾, ..., SOD⁽³⁾, SOD.1, SOD.2) and the first dynamic object dataset (DOD (1) (FID.1), ..., DOD⁽³⁾ (FID.3), DOD.1, DOD.2),
- determining, by means of the sending system (SSYS), a first virtual user-position of a user in the first VR environment,
- determining a second virtual user-position of a user in the second VR environment on the basis of the first user-position, wherein the second virtual user-position is the user-position in the second VR environment that is offset from the first virtual user-position by a constant value,
wherein determining the first state (ST.1, ..., ST.4) of the second VR environment is additionally based on the second user-position.

## Revendications

1. Procédé mis en oeuvre par ordinateur de transfert d'un état (ST.1, ..., ST.4) d'un premier environnement RV à un deuxième environnement RV, comprenant :
- la réception (REC-SOD) d'un ensemble (SOD⁽¹⁾, ..., SOD⁽³⁾, SOD.1, SOD.2) de données d'objet statique se rapportant à un objet (OBJ.1.1, OBJ.1.2, OBJ.1.3, OBJ.1.4, OBJ.2.1, OBJ.2.2, OBJ.2.3, OBJ.2.4, OBJ.3.1, OBJ.3.2, OBJ.3.3, OBJ.3.4) au moyen d'un système (RSYS, RSYS.1, RSYS.2) de réception,
dans lequel (OBJ.1.1, ..., OBJ.3.4) peut être représenté dans un premier environnement RV créé par un système (SSYS) d'émission et dans le deuxième environnement RV créé par le système (RSYS, RSYS.1, RSYS.2) de réception,
- la détermination (DET-DOD-1) d'un premier ensemble (DOD⁽¹⁾(FID.1), ..., DOD⁽³⁾(FID.3), DOD.1, DOD.2) de données d'objet dynamique se rapportant à l'objet (OBJ.1.1, ..., OBJ.3.4) au moyen du système (SSYS) d'émission,
dans lequel le premier ensemble (DOD⁽¹⁾(FID.1), ..., DOD (3) (FID.3), DOD.1, DOD.2) de données d'objet dynamique concerne une propriété (DP⁽¹⁾₁(FID.1), ..., DP⁽³⁾₁(FID.3)) dynamique de l'objet (OBJ.1, ..., OBJ.3) dans le premier environnement RV,
- la transmission (TRM-DOD-1) du premier ensemble (DOD⁽¹⁾(FID.1), ..., DOD⁽³⁾(FID.3), DOD.1, DOD.2) de données d'objet dynamique du système (SSYS) d'émission au système (RSYS, RSYS.1, RSYS.2) de réception,
- la détermination (DET-STAT-1) d'un premier état (ST.1, ..., ST.4) du deuxième environnement RV sur la base de l'ensemble (SOD⁽¹⁾, ..., SOD⁽³⁾, SOD.1, SOD.2) de données d'objet statique et du premier ensemble (DOD⁽¹⁾(FID.1), ..., DOD⁽³⁾(FID.3), DOD.1, DOD.2) de données d'objet dynamique au moyen du système (RSYS, RSYS.1, RSYS.2) de réception,
- la détermination (DET-UPOS-1) d'une première position d'utilisateur virtuelle d'un utilisateur dans le premier environnement RV au moyen du système (SSYS) d'émission,
- la transmission (TRM-UPOS-1) de la première position d'utilisateur virtuelle du système (SSYS) d'émission au système (RSYS, RSYS.1, RSYS.2) de réception,
- la détermination (DET-UPOS-2) d'une deuxième position d'utilisateur virtuelle d'un utilisateur dans le deuxième environnement RV sur la base de la première position d'utilisateur, dans lequel la deuxième position d'utilisateur virtuelle est la position d'utilisateur dans le deuxième environnement RV décalée d'une valeur constante par rapport à la première position d'utilisateur virtuelle,
dans lequel la détermination du premier état (ST.1, ..., ST.4) du deuxième environnement RV repose en outre sur la deuxième position d'utilisateur.

2. Procédé suivant la revendication 1, comprenant en outre :
- la détermination (DET-DOD-2) d'un deuxième ensemble (DOD⁽¹⁾(FID.1), ..., DOD⁽³⁾(FID.3), DOD.1, DOD.2) de données d'objet dynamique se rapportant à l'objet (OBJ.1.1, ..., OBJ.3.4) au moyen du système (SSYS) d'émission,
dans lequel le premier ensemble (DOD⁽¹⁾(FID. 1), ..., DOD⁽³⁾(FID. 3), DOD.1, DOD.2) de données d'objet dynamique concerne la propriété (DP⁽¹⁾₁(FID.1), ..., DP⁽³⁾₁(FID.3)) dynamique de l'objet (OBJ.1.1, ..., OBJ.3.4) à un premier instant dans le premier environnement RV, dans lequel le deuxième ensemble (DOD⁽¹⁾(FID. 1), ..., DOD⁽³⁾(FID. 3), DOD.1, DOD.2) de données d'objet dynamique concerne la propriété (DP⁽¹⁾₁(FID.1), ..., DP⁽³⁾₁(FID.3)) dynamique de l'objet (OBJ.1.1, ..., OBJ.3.4) à un deuxième instant dans le premier environnement RV,
- la transmission (TRM-DOD-2) du deuxième ensemble (DOD⁽¹⁾(FID.1), ..., DOD⁽³⁾(FID.3), DOD.1, DOD.2) de données d'objet dynamique du système (SSYS) de transmission au système (RSYS, RSYS.1, RSYS.2) de réception,
- la détermination (DET-STAT-2) d'un deuxième état (ST.1, ..., ST.4) du deuxième environnement RV reposant sur l'ensemble (SOD⁽¹⁾, ..., SOD⁽³⁾, SOD.1, SOD.2) de données d'objet statique et sur le deuxième ensemble (DOD⁽¹⁾(FID.1), ..., DOD⁽³⁾(FID.3), DOD.1, DOD.2) de données d'objet dynamique au moyen du système (RSYS, RSYS.1, RSYS.2) de réception.

3. Procédé suivant la revendication 2, comprenant en outre :
- la constatation (DET-CHG) d'une variation de la propriété (DP⁽¹⁾₁(FID.1), ..., DP⁽³⁾₁(FID.3)) dynamique de l'objet (OBJ.1.1, ..., OBJ.3.4), dans lequel la détermination du deuxième ensemble (DOD⁽¹⁾(FID.1), ..., DOD⁽³⁾(FID.3), DOD.1, DOD.2) s'effectue comme réaction à la constatation d'une variation de la propriété (DP⁽¹⁾₁(FID.1), ..., DP⁽³⁾₁(FID.3)) dynamique de l'objet (OBJ.1.1, ..., OBJ.3.4).

4. Procédé suivant l'une des revendications précédentes, dans lequel la propriété (DP⁽¹⁾(FID.1), ..., DP⁽³⁾₁(FID.3)) dynamique de l'objet (OBJ.1.1, ..., OBJ.3.4) peut être modifiée par une interaction d'un utilisateur avec le premier environnement RV.

5. Procédé suivant la revendication 4, dans lequel la propriété (DP⁽¹⁾₁(FID.1), ..., DP⁽³⁾₁(FID.3)) dynamique de l'objet (OBJ.1.1, ..., OBJ.3.4) concerne au moins l'une des propriétés suivantes de l'objet (OBJ.1.1, ..., OBJ.3.4) :
- position et/ou orientation de l'objet (OBJ.1.1, ..., OBJ.3.4),
- visibilité de l'objet (OBJ.1.1, ..., OBJ.3.4),
- combinaison de l'objet avec un autre objet (OBJ. 1.1, ..., OBJ. 3.4),
- paramètre lumineux de l'objet (OBJ.1.1, ..., OBJ.3.4).

6. Procédé suivant l'une des revendications précédentes, dans lequel l'ensemble (SOD⁽¹⁾, ..., SOD⁽³⁾, SOD.1, SOD.2) de données d'objet statique concerne au moins une propriété (SP⁽¹⁾₁, ..., SP⁽³⁾₁) statique de l'objet (OBJ.1.1, ..., OBJ.3.4), dans lequel la propriété (SP⁽¹⁾₁, ..., SP⁽³⁾₁) statique de l'objet (OBJ.1.1, ..., OBJ.3.4) ne se modifie pas par une interaction d'un utilisateur avec le premier environnement RV.

7. Procédé suivant la revendication 6, dans lequel la propriété (SP⁽¹⁾₁, ..., SP⁽³⁾₁) statique concerne au moins l'une des propriétés suivantes de l'objet (OBJ.1.1, ..., OBJ.3.4) :
- modèle dans l'espace de l'objet (OBJ.1.1, ..., OBJ.3.4),
- une ou plusieurs textures de l'objet (OBJ.1.1, ..., OBJ.3.4),
- propriété physique constante de l'objet (OBJ.1.1, ..., OBJ.3.4).

8. Procédé suivant l'une des revendications précédentes, dans lequel la détermination du premier état (ST.1, ..., ST.4) et/ou la détermination du deuxième état (ST.1, ..., ST.4) comprend un rendu de l'objet (OBJ.1.1, ..., OBJ.3.4).

9. Procédé suivant l'une des revendications précédentes, comprenant en outre :
- l'envoi (SND-TP) d'un paramètre (TP.1, TP.2) technique du système (RSYS, RSYS.1, RSYS.2) de réception à un serveur (SRV) au moyen du système (RSYS, RSYS.1, RSYS.2) de réception, dans lequel l'ensemble (SOD⁽¹⁾, ..., SOD⁽³⁾, SOD.1, SOD.2) de données d'objet est adapté au paramètre (TP.1, TP.2) technique du système (RSYS, RSYS.1, RSYS.2) de réception.

10. Procédé suivant l'une des revendications précédentes, comprenant en outre :
- la détermination (DET-ID) d'un identifiant d'un objet (OBJ.1.1, ..., OBJ.3.4) au moyen du système (SSYS) d'émission,
- la transmission (TRM-ID) de l'identifiant de l'objet (OBJ.1.1, ..., OBJ.3.4) du système (SSYS) d'émission au système (RSYS, RSYS.1, RSYS.2) de réception,
- l'envoi (SND-ID) de l'identifiant de l'objet (OBJ.1.1, ..., OBJ.3.4) à un serveur (SRV) au moyen du système (RSYS, RSYS.1, RSYS.2) de réception,
dans lequel la réception de l'ensemble (SOD⁽¹⁾, ..., SOD⁽³⁾, SOD.1, SOD.2) de données d'objet statique est effectuée en réaction à l'envoi de l'identifiant de l'objet (OBJ.1.1, ..., OBJ.3.4).

11. Système (TSYS) de transmission pour la transmission d'un état (ST.1, ..., ST.4) d'un premier environnement RV à un deuxième environnement RV, comprenant :
- un système (SSYS) d'émission, constitué pour la détermination (DET-DOD-1) d'un premier ensemble (DOD⁽¹⁾(FID.1), ..., DOD⁽³⁾(FID.3), DOD.1, DOD.2) de données d'objet dynamique se rapportant à un objet (OBJ.1.1, ..., OBJ.3.4), dans lequel l'objet (OBJ.1.1, ..., OBJ.3.4) peut être représenté dans le premier environnement RV créé par le système (SSYS) d'émission, dans lequel le premier ensemble (DOD⁽¹⁾(FID.1), ..., DOD⁽³⁾(FID.3), DOD.1, DOD.2) de données d'objet dynamique concerne une propriété (DP⁽¹⁾₁(FID.1), ..., DP⁽³⁾₁FID.3)) dynamique de l'objet (OBJ.1.1, ..., OBJ.3.4) dans le premier environnement RV, constitué en outre pour la détermination (DET-UPOS-1) d'une première position virtuelle d'utilisateur d'un utilisateur dans le premier RV au moyen du système (SSYS) d'émission,
- un système (RSYS, RSYS.1, RSYS.2) de réception constitué pour la réception (REC-SOD) d'un ensemble (SOD⁽¹⁾, ..., SOD⁽³⁾, SOD.1, SOD.2) de données d'objet statique se rapportant à l'objet (OBJ.1.1, ..., OBJ.3.4), dans lequel l'objet (OBJ.1.1, ..., OBJ.3.4) peut être représenté dans le deuxième environnement RV créé par le système (RSYS, RSYS.1, RSYS.2) de réception,
constitué en outre pour la détermination (DET-STAT-1) d'un premier état (ST.1, ..., ST. 4) du deuxième environnement RV reposant sur l'ensemble (SOD⁽¹⁾, ..., SOD⁽³⁾, SOD.1, SOD.2) de données d'objet statique et sur le premier ensemble (DOD⁽¹⁾(FID.1), ..., DOD⁽³⁾(FID.3), DOD.1, DOD.2) de données d'objet dynamique, constitué en outre pour la détermination (DET-UPOS-2) d'une deuxième position virtuelle d'utilisateur d'un utilisateur dans le deuxième environnement RV, reposant sur la première position d'utilisateur, dans lequel la détermination du premier état (ST.1, ..., ST.4) du deuxième environnement RV repose en outre sur la deuxième position d'utilisateur, dans lequel la deuxième position virtuelle d'utilisateur est la position d'utilisateur dans le deuxième environnement RV décalée d'une valeur constante par rapport à la première position virtuelle d'utilisateur ;
dans lequel le système (TSYS) de transmission est constitué en outre pour la transmission (TRM-DOD-1) du premier ensemble (DOD⁽¹⁾(FID.1), ..., DOD⁽³⁾(FID.3), DOD.1, DOD.2) de données d'objet dynamique du système (SSYS) d'émission au système (RSYS, RSYS.1, RSYS.2) de réception,
dans lequel le système (TSYS) de transmission est constitué en outre pour la transmission (TRM-UPOS-1) de la première position virtuelle d'utilisateur du système (SSYS) d'émission au système (RSYS, RSYS.1, RSYS.2) de réception.

12. Produit de programme d'ordinateur comprenant un programme d'ordinateur, qui peut être chargé directement dans une mémoire d'un système (TSYS) de transmission ayant des parties de programme pour effectuer tous les stades du procédé suivant l'une des revendications 1 à 10, lorsque les parties de programme sont réalisées par le système (TSYS) de transmission.

13. Support de mémoire, déchiffrable par ordinateur, sur lequel sont mises en mémoire des parties de programme, déchiffrables et réalisables par un système (TSYS) de transmission pour effectuer tous les stades du procédé suivant l'une des revendications 1 à 10 lorsque les parties de programme sont réalisées par le système (TSYS) de transmission.

14. Structure (DS) de données mise en oeuvre par ordinateur pour l'application dans un procédé suivant l'une des revendications 1 à 10 ou dans un système de transmission suivant la revendication 11, comprenant une structure (SDS) de données partielle statique et une structure (DDS.1, ..., DDS.3) de données partielle dynamique, dans laquelle la structure (SDS) de données partielle statique comprend des ensembles (SOD⁽¹⁾, ..., SOD⁽³⁾, SOD.1, SOD.2) de données d'objet statique se rapportant à des objets (OBJ.1, ..., OBJ.3), dans laquelle la structure (DDS.1, ..., DDS.3) de données partielle dynamique comprend des ensembles (DOD⁽¹⁾(FID. 1), ..., DOD⁽³⁾(FID. 3), DOD.1, DOD.2) de données d'objet dynamique se rapportant aux objets (OBJ.1.1, ..., OBJ.3.4),
et dans laquelle l'état (ST.1, ..., ST.4) d'un environnement RV peut être représenté sur la base des ensembles (SOD⁽¹⁾, ..., SOD⁽³⁾, SOD.1, SOD.2) de données d'objet statique et des ensembles (DOD⁽¹⁾(FID.1), ..., DOD⁽³⁾(FID.3), DOD.1, DOD.2) de données d'objet dynamique.

15. Procédé mis en oeuvre par ordinateur de détermination d'un état (ST.1, ..., ST.4) d'un objet (OBJ.1.1, ..., OBJ.3.4) dans un deuxième environnement RV, comprenant :
- la réception d'un ensemble (SOD⁽¹⁾, ..., SOD⁽³⁾, SOD.1, SOD.2) de données d'objet statique se rapportant à l'objet (OBJ.1.1, ..., OBJ.3.4) au moyen d'un système (RSYS, RSYS.1, RSYS.2) de réception, dans lequel l'objet peut être représenté dans le deuxième environnement RV pouvant être créé au moyen du système (RSYS, RSYS.1, RSYS.2) de réception,
- la réception d'un premier ensemble (DOD⁽¹⁾(FID.1), ..., DOD⁽³⁾(FID.3), DOD.1, DOD.2) de données d'objet dynamique se rapportant à l'objet (OBJ.1.1, ..., OBJ.3.4) au moyen d'un système (RSYS, RSYS.1, RSYS.2) de réception,
dans lequel le premier ensemble (DOD⁽¹⁾(FID. 1), ..., DOD⁽³⁾(FID. 3), DOD.1, DOD.2) de données d'objet dynamique concerne une propriété (DP⁽¹⁾₁(FID.1), ..., DP⁽³⁾₁(FID.3)) dynamique de l'objet (OBJ.1.1, ..., OBJ.3.4) dans un premier environnement RV,
- la détermination d'un premier état (ST.1, ..., ST.4) de l'objet (OBJ.1.1, ..., OBJ.3.4) dans le deuxième environnement RV reposant sur l'ensemble (SOD⁽¹⁾, ..., SOD⁽³⁾, SOD.1, SOD.2) de données d'objet statique et sur l'ensemble (DOD⁽¹⁾(FID.1), ..., DOD⁽³⁾(FID.3), DOD.1, DOD.2) de données d'objet dynamique au moyen du système (RSYS, RSYS.1, RSYS.2) de réception,
- la détermination d'une première position virtuelle d'utilisateur d'un utilisateur dans le premier environnement RV au moyen du système (SSYS) d'émission,
- la détermination d'une deuxième position virtuelle d'utilisateur d'un utilisateur dans le deuxième environnement RV reposant sur la première position d'utilisateur,
dans lequel la deuxième position d'utilisateur virtuelle est la position d'utilisateur dans le deuxième environnement RV décalée d'une valeur constante par rapport à la première position d'utilisateur virtuelle,
dans lequel la détermination du premier état (ST.1, ..., ST.4) du deuxième environnement RV repose en outre sur la deuxième position d'utilisateur.
